# EUROPEAN PATENT APPLICATION

(11) **EP 4 410 596 A1**
(43) Date of publication of application: **07.08.2024**
(21) Application number: 22876075.7
(22) Date of filing: 22.09.2022
(51) Int. Cl.: B60N 2/30, B60N 2/90

(54) **VEHICLE SEAT**

(30) Priority: 28.09.2021 US 202163249094 P; 28.09.2021 US 202163249105 P; 28.09.2021 US 202163249170 P; 28.09.2021 US 202163249226 P; 24.02.2022 US 202263313404 P; 07.06.2022 JP 2022092541; 07.06.2022 JP 2022092542; 07.06.2022 JP 2022092543; 07.06.2022 JP 2022092544
(71) Applicant: TS Tech Co., Ltd., Asaka-shi Saitama 351-0012 (JP)
(72) Inventor: KAMEI, Soichiro, Shioya-gun, Tochigi 329-1217 (JP); TACHIKAWA, Yoichi, Shioya-gun, Tochigi 329-1217 (JP); AKUTSU, Shuichi, Shioya-gun, Tochigi 329-1217 (JP)
(74) Representative: Grünecker Patent- und Rechtsanwälte PartG mbB
(86) International application number: PCT/JP2022/035530
(87) International publication number: WO 2023/054208

(57) **Abstract**

There is provided a conveyance seat in which components of a device that switches the state of a seat body can be firmly assembled in a well-balanced manner. A conveyance seat is a seat capable of switching a seat body between a "normal state" and a "movement state". The conveyance seat includes a lock device 90 that locks a movement operation of the seat body; lock covers 98 and 99 covering the lock device; a lever attachment member 70 attached to the conveyance seat; and an operation lever 50 that is attached to the lever attachment member, and that releases a locked state of the lock device. The lever attachment member 70 includes a first fitting portion 76 fitted to a first fitted portion 98b of the lock cover 98, and a second fitting portion 77 fitted to a second fitted portion 99b of the lock cover 99. The first fitting portion and the second fitting portion extend in directions orthogonal to a fitting direction of the lock covers, and extend in directions intersecting each other.

## Description

### TECHNICAL FIELD

The present invention relates to a conveyance seat, particularly to a conveyance seat capable of switching a seat body including a seat back and a seat cushion from a normal state.

### BACKGROUND ART

In the related art, a vehicle seat capable of switching a seat body between a "normal state" and a "movement state" where the seat body is moved from the normal state has been known. Examples of the "movement state" include a "storage state" where the seat body is stored and moved toward a vehicle body floor side, a "slide movement state" where the seat body is slidingly moved from the normal state to a predetermined position in a seat front to rear direction, and a "reclining state" where the seat body (seat back) is tilted rearward from the normal state to a predetermined position.

Among the vehicle seats described above, there is a vehicle seat including a lock device (lock member) that locks the movement operation of a seat body in the "normal state", and an operation lever that is operated to release the locked state of the lock device (for example, refer to PATENT LITERATURE 1).

The vehicle seat described in PATENT LITERATURE 1 is a seat capable of switching a seat body between the "normal state" and the "storage state".

The vehicle seat includes a lock device (lock member); a lock cover that covers the lock device; a lever attachment member attached to the vehicle seat; and an operation lever that is attached to the lever attachment member, and that operates to release the locked state of the lock device.

The lock cover and the lever attachment member are assembled by a plurality of fitting portions in a seat width direction, and these fitting portions extend in the same direction in a seat side view.

### CITATION LIST

### PATENT LITERATURE

PATENT LITERATURE 1: JP 2014-506851 A

### SUMMARY OF INVENTION

### TECHNICAL PROBLEM

By the way, in a conveyance seat as described in PATENT LITERATURE 1, firmly assembling components of a switching device (lock device), which switches a seat body between the "normal state" and the "movement state", in a well-balanced manner is required.

For example, making the structure firm even when loads are applied in various directions by devising and fitting components (a lock cover and a lever attachment member) of the switching device to each other is required.

The present invention has been made in view of the above-described problems, and an object of the present invention is to provide a conveyance seat in which components of a device that switches the state of a seat body can be more firmly assembled in a well-balanced manner than in the related art.

In addition, another object of the present invention is to provide a conveyance seat in which the assembly structure of components of a device that switches the state of a seat body is simplified.

### SOLUTION TO PROBLEM

The above-described problems are solved by a conveyance seat of the present invention, the seat including: a seat body including a seat back and a seat cushion, the seat capable of switching the seat body between a normal state and a movement state where the seat body is moved from the normal state; a lock device that locks a movement operation of the seat body in the normal state; a lock cover covering the lock device; a lever attachment member attached to the conveyance seat; and an operation lever that is attached to the lever attachment member, and that operates to release a locked state of the lock device. The lever attachment member includes a first fitting portion fitted to a first fitted portion provided in the lock cover, and a second fitting portion fitted to a second fitted portion provided in the lock cover. The first fitting portion and the second fitting portion extend in respective directions orthogonal to a fitting direction of the lock cover, and extend in directions intersecting each other.

With the above-described configuration, it is possible to realize the conveyance seat in which components of the device that switches the state of the seat body can be firmly assembled in a well-balanced manner. In addition, the assembly structure of the components of the device can be simplified.

In a detailed description, the lever attachment member is fitted to the lock cover by a plurality of the fitting portions, and the first fitting portion and the second fitting portion extend in the respective directions orthogonal to the fitting direction of the lock cover, and extend in the directions intersecting each other. In such a manner, since the first fitting portion and the second fitting portion extend in different directions, for example, even when loads are applied in various directions, the fitting structure can be made more firm compared to the related art.

In this case, the movement state may be a storage state where the seat back is stored and moved toward a vehicle body floor side. The lock device may include a lock member that detachably engages with a striker provided on a vehicle body or the conveyance seat, and that moves between a lock position where the storage operation of the seat back is locked and an unlock position. The first fitting portion and the second fitting portion may extend in directions orthogonal to each other.

With the above-described configuration, in the conveyance seat in which the seat body can be stored, the components can be firmly assembled in a more balanced manner.

In this case, the lock cover may be assembled to the lever attachment member in a seat width direction. The first fitting portion and the second fitting portion may be disposed at different positions in an up to down direction, and may be disposed at different positions in a seat front to rear direction.

In addition, the conveyance seat may further include a connecting member that connects the lock device and the operation lever, and that acts to switch the lock device from the locked state to an unlocked state in response to the operation of the operation lever. The lever attachment member may further include a third fitting portion fitted to a third fitted portion provided in the lock cover. The third fitting portion may be disposed opposite to a side of the first fitting portion and the second fitting portion with respect to the connecting member.

With the above-described configuration, the lever attachment member and the lock cover can be firmly assembled in a more balanced manner.

In this case, the first fitting portion and the third fitting portion may extend long in the same direction.

In addition, the lock cover may be assembled to the lever attachment member in a seat width direction. The second fitting portion may be disposed between the first fitting portion and the third fitting portion in a seat front to rear direction.

With the above-described configuration, the lever attachment member and the lock cover can be firmly assembled in a more balanced manner.

In this case, the lock cover may include a first lock cover covering the lock device, and a second lock cover attached to a side surface of the first lock cover. The first fitted portion and the third fitted portion may be formed in the first lock cover, and the second fitted portion is formed in the second lock cover.

As described above, since the lever attachment member, the first lock cover, and the second lock cover are fitted to each other by the plurality of fitting portions, these components can be stably and firmly assembled.

In this case, the lever attachment member and the lock cover may be assembled by fitting the first fitting portion, the second fitting portion, and the third fitting portion in the same direction.

With the above-described configuration, the work of assembling the lock cover to the lever attachment member is facilitated. In addition, the automation of the assembly work is also facilitated.

In this case, the lock cover may include a cover flange formed to protrude from a side surface of an outer edge portion of the lock cover toward a lock device side, and disposed to surround the lock device. The first fitting portion, the second fitting portion, and the third fitting portion may be disposed on a side surface of the lock cover outside the cover flange.

With the above-described configuration, an outer portion (outer edge portion) of the lock cover can be fitted to the lever attachment member, and the fitting strength of the lock cover can be increased.

In this case, the lock cover may include a first reinforcing portion formed to protrude from the side surface of the outer edge portion of the lock cover toward the lock device side, and connecting the cover flange and the first fitting portion, and a second reinforcing portion formed to protrude from the side surface of the outer edge portion of the lock cover toward the lock device side, and connecting the cover flange and the third fitting portion.

With the above-described configuration, the fitting strength of the first fitting portion and the third fitting portion can be increased.

In this case, the conveyance seat may further include a connecting member that connects the lock device and the operation lever, and that acts to switch the lock device from the locked state to an unlocked state in response to the operation of the operation lever; and a position holding member attached to the connecting member, and holding a position of the connecting member. The connecting member may extend between the lock device and the operation lever. The position holding member may extend in an extending direction of the connecting member, and may be attached to the connecting member to be aligned along the connecting member.

With the above-described configuration, it is possible to realize the conveyance seat in which the lock device is made into a compact structure. Particularly, the assembly structure of the components of the device can be simplified.

In a detailed description, the position holding member that holds the position of the connecting member extends in the extending direction of the connecting member, and is attached to the connecting member to be aligned along the connecting member. For this reason, the connecting member and the position holding member can be more compactly disposed compared to the related art. In addition, the position holding member is easily assembled to the connecting member.

In this case, the movement state may be a storage state where the seat back is stored and moved toward a vehicle body floor side. The lock device may include a lock member that detachably engages with a striker provided on a vehicle body or the conveyance seat, and that moves between a lock position where the storage operation of the seat back is locked and an unlock position. The position holding member may have flexibility, and may bend in a direction orthogonal to an extending direction of the position holding member to hold the position of the connecting member.

With the above-described configuration, in the conveyance seat in which the seat body can be stored, the components can be compactly disposed.

In this case, the conveyance seat may further include a connecting member that connects the lock device and the operation lever, and that acts to switch the lock device from the locked state to an unlocked state in response to the operation of the operation lever; and a biasing member assembled to the connecting member, and biasing the connecting member toward a lock device side or an operation lever side. The connecting member may include an assembly portion to which the biasing member is assembled. A body portion of the connecting member and the assembly portion may be integrally formed.

With the above-described configuration, it is possible to realize the conveyance seat in which the lock device is made into a simple structure. In addition, the assembly structure of the components of the device can be simplified.

In a detailed description, the connecting member includes the assembly portion to which the biasing member is assembled, and the body portion of the connecting member and the assembly portion are integrally formed. For this reason, it is possible to eliminate the need for separate members as much as possible when the components (the connecting member and the biasing member) are assembled. In addition, the biasing member is easily assembled to the connecting member.

In this case, the movement state may be a storage state where the seat back is stored and moved toward a vehicle body floor side. The lock device may include a lock member that detachably engages with a striker provided on a vehicle body or the conveyance seat, and that moves between a lock position where the storage operation of the seat back is locked and an unlock position. The assembly portion may be an assembly projection protruding from a side surface of the body portion of the connecting member toward a biasing member, and may be assembled to one end portion of the biasing member.

With the above-described configuration, in the conveyance seat in which the seat body can be stored, the components can be compactly disposed.

In this case, the conveyance seat may further include a cover member disposed between the lever attachment member and the operation lever, and covering the operation lever; and a plate member having a plate shape, provided between the lever attachment member and the cover member, and disposed to surround the operation lever. The operation lever may be provided to be exposed from a skin opening hole formed on an outer surface of a skin material serving as a covering material of the seat body. An outer peripheral portion of the skin opening hole of the skin material may be sandwiched between the cover member and the plate member. The lever attachment member may protrude from a body portion of the lever attachment member toward a plate member side, and may support the plate member by coming into contact with a side surface of the plate member.

With the above-described configuration, it is possible to realize the conveyance seat in which the assembly structure of the components of the device that switches the state of the seat body is simplified.

In a detailed description, the lever attachment member includes the plate support portion protruding from the body portion of the lever attachment member toward the plate member side, and supporting the plate member by coming into contact with the side surface of the plate member. For this reason, when the plate member is assembled to the lever attachment member, there is no need to perform additional processing on the plate member side. Namely, the assembly structure can be more simplified than in the related art.

### ADVANTAGEOUS EFFECTS OF INVENTION

According to the present invention, it is possible to realize the conveyance seat in which the components of the device that switches the state of the seat body can be firmly assembled in a well-balanced manner. In addition, the assembly structure of the components of the device can be simplified.

In addition, according to the present invention, in the conveyance seat in which the seat body can be stored, the components can be firmly assembled in a more balanced manner.

In addition, according to the present invention, the lever attachment member and the lock cover can be firmly assembled in a more balanced manner. In addition, these components can be stably assembled.

In addition, according to the present invention, the work of assembling the lock cover to the lever attachment member is facilitated. In addition, the automation of the assembly work is also facilitated.

In addition, according to the present invention, the fitting strength of the lock cover can be increased.

In addition, according to the present invention, it is possible to realize the conveyance seat in which the lock device is made into a compact structure. Particularly, the assembly structure of the components of the device can be simplified.

In addition, according to the present invention, in the conveyance seat in which the seat body can be stored, the components can be compactly disposed.

In addition, according to the present invention, it is possible to realize the conveyance seat in which the lock device is made into a simple structure. In addition, the assembly structure of the components of the device can be simplified.

In addition, according to the present invention, in the conveyance seat in which the seat body can be stored, the components can be compactly disposed.

In addition, according to the present invention, it is possible to realize the conveyance seat in which the assembly structure of the components of the device that switches the state of the seat body is simplified.

### BRIEF DESCRIPTION OF DRAWINGS

FIG. 1 is a perspective view of a conveyance seat of a first embodiment.
FIG. 2 is a perspective view of a seat frame.
FIG. 3 is a perspective view of an operation lever, a cover member, a plate member, a lever attachment member, a lock member, and lock covers.
FIG. 4 is a perspective view of FIG. 3 when viewed at another angle.
FIG. 5 is an exploded perspective view of FIG. 3 (Part 1) .
FIG. 6 is an exploded perspective view of FIG. 3 (Part 2) .
FIG. 7 is a view showing a state where the plate member and the lever attachment member are assembled.
FIG. 8 is a view showing a state where a skin material is sandwiched between the plate member and the lever attachment member.
FIG. 9 is a cross-sectional view of the skin material, the operation lever, the cover member, the plate member, and the lever attachment member.
FIG. 10 is a side view of the operation lever, the lever attachment member, a connecting link, and a position holding member.
FIG. 11 is a perspective view of the connecting link and the position holding member.
FIG. 12 is a side view of the connecting link and the position holding member.
FIG. 13 is a perspective view of the lever attachment member, the connecting link, and the position holding member, and is a view showing a state where the position holding member is in contact with the lever attachment member.
FIG. 14 is a perspective view of the connecting link, the lock member, and a biasing spring, and is a view showing an assembled state of the connecting link.
FIG. 15 is a view showing a state where the lever attachment member and the lock covers are fitted to each other.
FIG. 16 is a view showing fitting portions of the lock cover and a second lock cover.
FIG. 17 is a view showing a state where the operation lever and the lock member are at a "lock position".
FIG. 18 is a view showing a state where the operation lever and the lock member are at an "intermediate position".
FIG. 19 is a view showing a state where the operation lever and the lock member are at an "unlock position".
FIG. 20 is a side view of a cover member and a lever attachment member of a modification example.
FIG. 21 is a perspective view of a conveyance seat of a second embodiment.
FIG. 22 is a perspective view of a switching device.
FIG. 23 is a perspective view of FIG. 22 when viewed at another angle.
FIG. 24 is a side view of the switching device, and is a view showing a state where a buffer member is attached to a lock device (lock cover).
FIG. 25 is an exploded perspective view of the buffer member and the lock cover (first lock cover).
FIG. 26 is an assembly view of the buffer member and the lock cover.
FIG. 27 is a perspective view of the buffer member.
FIG. 28 is a cross-sectional view taken along line XXVIII-XXVIII of FIG. 26.
FIG. 29 is a view showing a state where a buffer member of Modification Example 1 is attached to a lock cover.
FIG. 30 is an exploded perspective view of the buffer member and the lock cover.
FIG. 31 is a perspective view of the buffer member.
FIG. 32 is an exploded perspective view of a buffer member and a lock cover of Modification Example 2.
FIG. 33 is a perspective view of the buffer member.
FIG. 34 is an exploded perspective view of a buffer member and a lock cover of Modification Example 3.
FIG. 35 is a perspective view of the buffer member.
FIG. 36 is an exploded perspective view of a buffer member and a lock cover of Modification Example 4.
FIG. 37 is a perspective view of the buffer member.

### DESCRIPTION OF EMBODIMENTS

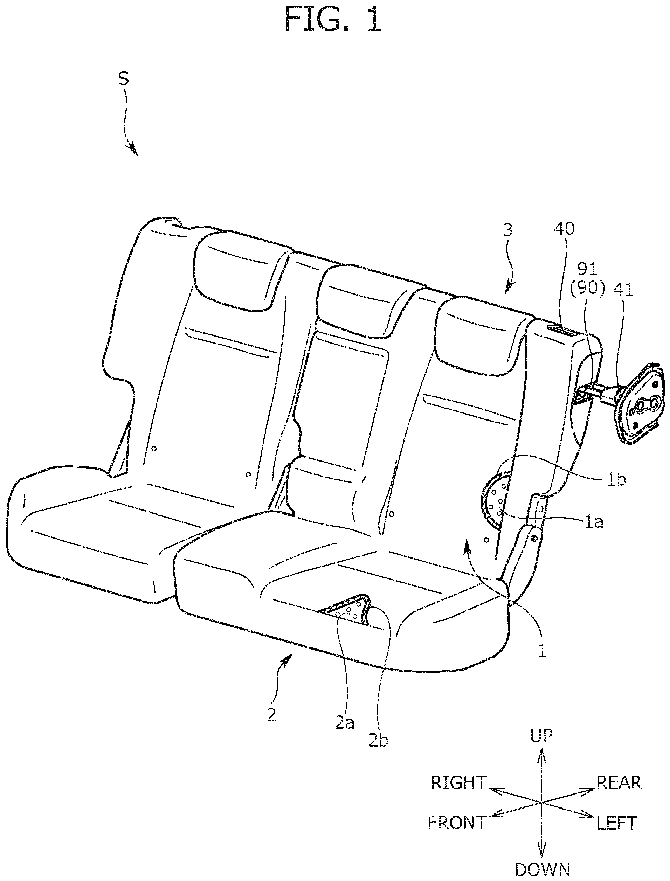

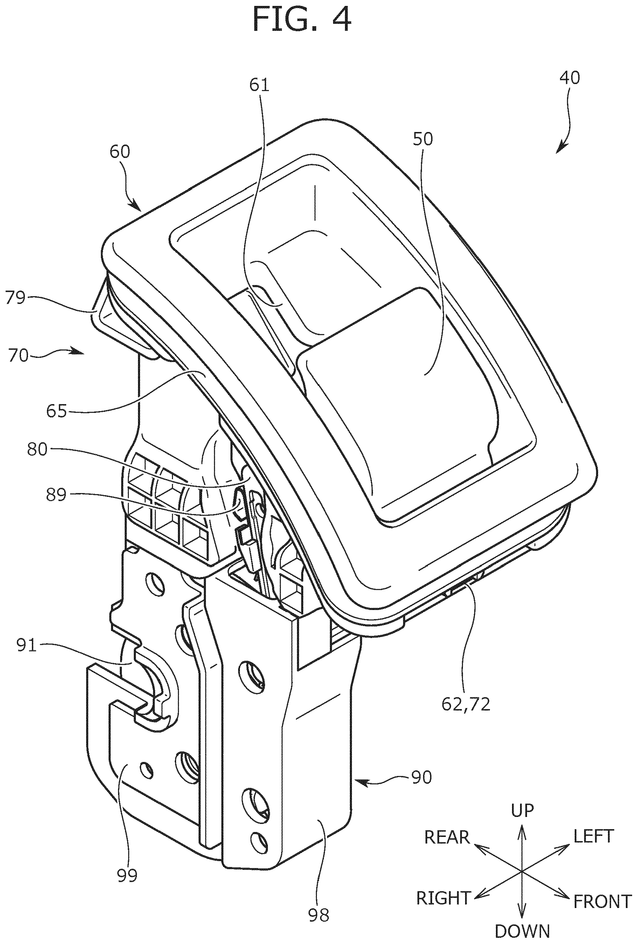

Hereinafter, embodiments according to the present invention will be described with reference to FIGS. 1 to 37.

The present embodiment relates to a conveyance seat capable of switching a seat body between a "normal state" and a "movement state", the seat including: a lock member that locks a movement operation of the seat body; an operation lever that operates to release a locked state of the lock member; a connecting link that connects the lock member and the operation lever, and that acts to unlock the lock member in response to the operation of the operation lever; and a position holding member attached to the connecting link, and holding a position of the connecting link. The position holding member extends in an extending direction of the connecting link, and is attached to the connecting link to be aligned along the connecting link.

Incidentally, a side on which an occupant is seated with respect to a seat back of the conveyance seat is a seat front side.

### <First embodiment>

### <<Overall configuration of seat>>

As shown in FIG. 1, a conveyance seat S of the present embodiment is, for example, a rear seat corresponding to a rear seat of a vehicle. Incidentally, the conveyance seat S can also be used as a middle seat in a second row of a vehicle including three rows of seats in a vehicle front to rear direction.

The conveyance seat S is a seat that can be arranged in two types of seat modes: a "normal state" where a seated occupant can be seated, and a "storage state" where a seat body is stored on a vehicle body floor side.

Specifically, when an occupant operates an operation lever 50 shown in FIG. 1 when the conveyance seat S is in the "normal state", the conveyance seat S switches to the "storage state" where the seat body (seat back) is reclined forward, folded, and stored in a vehicle body floor. In addition, when the conveyance seat S is in the "storage state", the occupant returns the conveyance seat S to the "normal state" by manually raising the seat body upward.

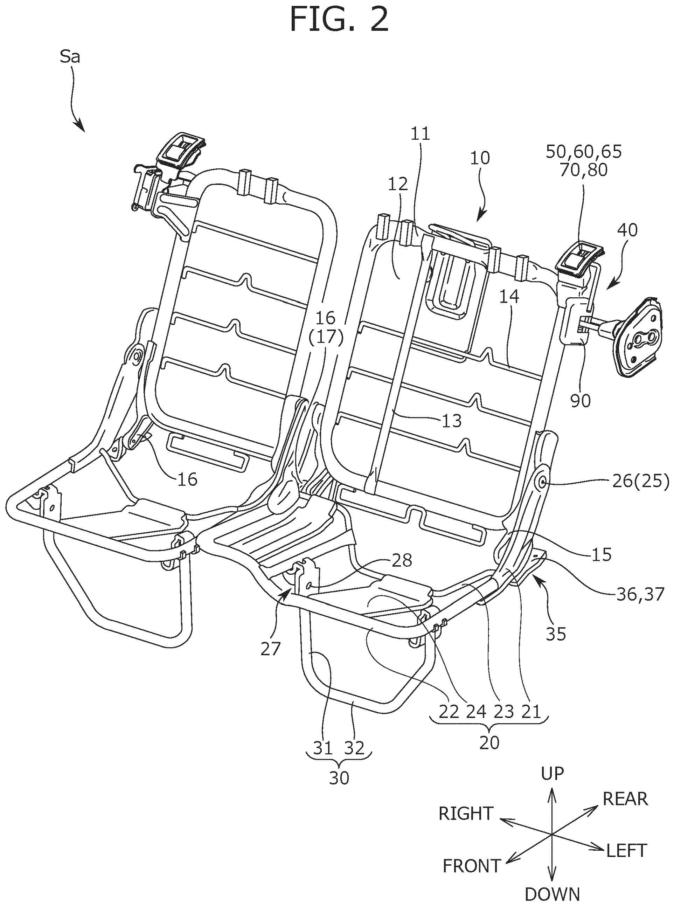

As shown in FIGS. 1 and 2, the conveyance seat S mainly includes the seat body including a seat back 1, a seat cushion 2, and a headrest 3; a support leg 30 attached between the seat cushion 2 and the vehicle body floor, and supporting the seat cushion 2; a support base 35 that rotatably supports the seat back 1; and a switching device 40 that is attached to an outer surface of the seat back 1 in a seat width direction, and that switches the seat body from the "normal state" to the "storage state".

As shown in FIG. 1, the seat back 1 is a backrest portion that supports the back of the occupant from the rear, and is configured by placing a pad material 1a on a back frame 10 serving as a skeleton shown in FIG. 2 and by covering the back frame 10 and the pad material 1a with a skin material 1b.

Incidentally, the operation lever 50 is attached to a left portion of an upper surface of the seat back 1 in the seat width direction.

The seat cushion 2 is a seating portion that supports the occupant from below, and is configured by placing a pad material 2a on a cushion frame 20 serving as a skeleton shown in FIG. 2 and by covering the cushion frame 20 and the pad material 2a with a skin material 2b.

The headrest 3 is a head portion that supports the head of the occupant from the rear, and is configured by placing a pad material on a pillar (not shown) serving as a core material and by covering the pillars and the pad material with a skin material.

As shown in FIG. 2, the back frame 10 is made of a rectangular frame-shaped body, and mainly includes a main frame 11 having a frame shape and made of a pipe material; a panel frame 12 having a plate shape and attached to the seat rear of the main frame 11; a connecting frame 13 attached to the frame inside of the main frame 11, and extending in an up to down direction; and an elastic support member 14 extending in the seat width direction, and supporting the seated occupant.

Right and left vehicle body connecting brackets 15 for connecting to the support base 35 are attached to an outer surface of a lower portion of the main frame 11.

In addition, the switching device 40 for connecting to a striker 41 provided on a vehicle body shown in FIG. 1 is attached to an outer surface of an upper portion of the main frame 11.

As shown in FIG. 2, each of the vehicle body connecting brackets 15 is made of a sheet metal member extending in the up to down direction, and an upper portion thereof is attached to the outer surface of the main frame 11, and a lower portion thereof is rotatably attached to an inner surface of the support base 35.

The vehicle body connecting brackets 15 are sandwiched between the back frame 10 and the cushion frame 20 in the seat width direction.

A seat rotating shaft 16 supported in the seat width direction by the support base 35 is provided at the lower portion of the left vehicle body connecting bracket 15, and a reclining device 17 that rotatably connects the back frame 10 to the support base 35 is attached to a lower end portion of the right vehicle body connecting bracket 15.

As shown in FIG. 2, the reclining device 17 is attached to an outer surface of the right vehicle body connecting bracket 15 in the seat width direction.

The reclining device 17 includes a spiral spring (not shown) that rotates the back frame 10 forward about the seat rotating shaft 16 to bias the back frame 10 to the storage state.

The spiral spring is configured such that one end portion thereof is locked to a back frame 10 side and the other end portion thereof is locked to a support base 35 side.

The reclining device 17 can be actuated by the release of the locked state of the seat back 1 upon the operation of the operation lever 50, and the back frame 10 can be rotated forward and folded toward the vehicle body floor side by the biasing force of the spiral spring.

As shown in FIG. 2, the cushion frame 20 is made of a rectangular frame-shaped body, and mainly includes right and left side frames 21 disposed on the right and left sides; a front connecting frame 22 connecting front portions of the side frames 21; a central connecting frame 23 connecting substantially central portions of the side frames 21 in the front to rear direction; and a pan frame 24 as a plate-shaped frame connecting the front connecting frame 22 and the central connecting frame 23.

Each of the side frames 21 is made of a sheet metal member having a U-shaped cross-section and extending in the seat front to rear direction, and a front portion thereof is connected to the front connecting frame 22, and a rear portion thereof is attached to an outer surface of the back frame 10 via the vehicle body connecting bracket 15.

Incidentally, a cushion rotating device 25 that connects the cushion frame 20 to the back frame 10 so as to be rotatable about a cushion rotating shaft 26 is attached to a rear end portion of the left side frame 21.

The front connecting frame 22 is a pipe member of a U-shaped body, and a leg rotating device 27 that connects the support leg 30 to the cushion frame 20 so as to be rotatable about a leg rotating shaft 28 is attached to an inner surface of the front connecting frame 22 in the seat width direction.

As shown in FIG. 2, the support leg 30 is a pipe member of a U-shaped body that supports the seat cushion 2 from below, and includes leg body portions 31 disposed on the right and left sides, and a leg connecting portion 32 connecting lower end portions of the leg body portions 31.

Upper end portions of the leg body portions 31 are connected to inner surfaces of central portions of the cushion frame 20 in the front to rear direction. In addition, a central portion of the leg connecting portion 32 in the seat width direction is detachably held by a leg holding member (not shown) located on the vehicle body floor.

An upper end portion of the support leg 30 further projects to the seat front than a lower end portion of the support leg 30, and the support leg 30 is inclined forward and upward from the lower end portion toward the upper end portion of the support leg 30.

As shown in FIG. 2, the support base 35 is a member that supports the seat back 1 from below, and is a sheet metal member of an L-shaped body that is long in the seat front to rear direction.

The support base 35 is disposed on the side in the seat width direction, and is connected to the vehicle body floor.

Specifically, the support base 35 includes a connecting wall portion 36 connected to an upper surface of the vehicle body floor, and an outer wall portion 37 bending and extending upward from an inner end portion of the connecting wall portion 36, and connected to a lower end portion of the vehicle body connecting bracket 15 via the seat rotating shaft 16.

### <<Switching device>>

As shown in FIGS. 1 and 2, the switching device 40 is a device that switches the conveyance seat S from the "normal state" to the "storage state", and is attached to an upper portion of the seat back 1 (back frame 10).

In the conveyance seat S, when the occupant operates the operation lever 50 in the normal state (usage state) of the conveyance seat S, the locked state of the seat back 1 is released by the switching device 40. The reclining device 17 shown in FIG. 2 can be actuated upon the unlocking of the seat back 1, and specifically, the seat back 1 can be rotated forward and folded by the biasing force of the spiral spring (not shown).

In addition, each of the cushion rotating device 25 and the leg rotating device 27 shown in FIG. 2 can be actuated upon the rotational operation of the seat back 1, and specifically, the support leg 30 can be rotated and folded toward a seat cushion 2 side about the leg rotating shaft 28 by the biasing force of the spiral spring (not shown).

Through a series of the operations described above, the seat body is stored in the vehicle body floor, and the conveyance seat S switches from the "normal state" to the "storage state".

When the occupant wants to return the conveyance seat S from the "storage state" to the "normal state", the occupant may switch the seat back 1 to a locked state by lifting the seat body by hand against the biasing force of the spiral spring (not shown) and by causing a lock member 91 of the switching device 40 to engage with the striker 41.

Incidentally, the striker 41 is a part of a vehicle body member, and is fixed to the vehicle body.

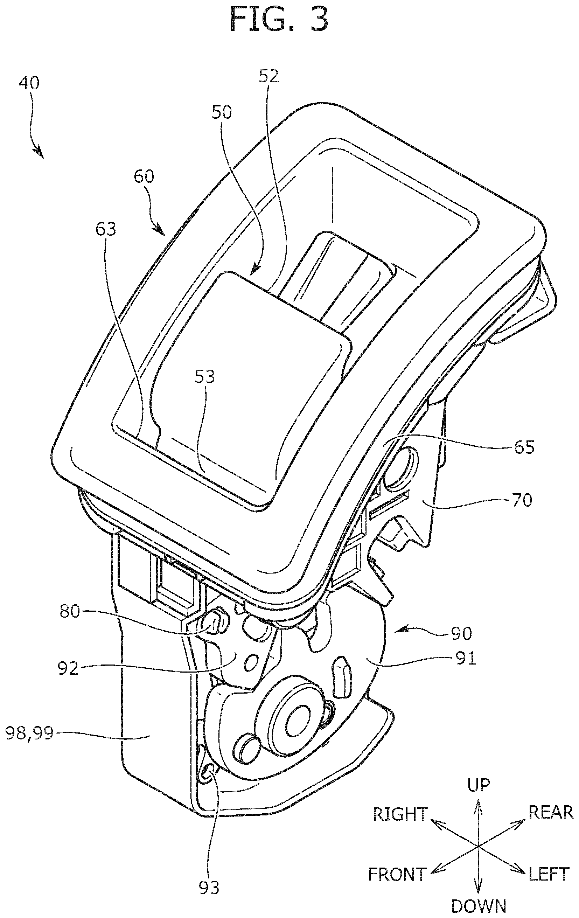

As shown in FIGS. 3 to 6, the switching device 40 includes a lock device 90 that locks the movement operation of the seat body in the "normal state"; the operation lever 50 that operates to release the locked state of the lock device 90; a connecting link 80 that connects the lock device 90 and the operation lever 50, and that acts to unlock the lock device 90 in response to the operation of the operation lever 50; and a position holding member 89 attached to the connecting link 80, and holding the position of the connecting link 80.

The operation lever 50 is housed in a cover member 60 and a lever attachment member 70 provided on the upper surface of the seat back 1. The operation lever 50 is rotatably attached to the lever attachment member 70 via lever rotating shafts 51.

The lock device 90 is covered with lock covers 98 and 99, and is housed in the lock covers 98 and 99.

### <<Operation lever, cover member, plate member, and lever attachment member>>

As shown in FIGS. 3 to 6, the operation lever 50 is a lever that is rotationally operated to release the locked state of the lock device 90, and is attached to a side portion of the seat back 1.

In a detailed description, the operation lever 50 is housed in the cover member 60 and the lever attachment member 70 provided on the outer surface of the seat back 1. The operation lever 50 is rotatably attached to the lever attachment member 70 via lever rotating shafts 51.

The operation lever 50 is a lever that is long in the seat front to rear direction, and a front end portion thereof corresponds to a "proximal end portion" and a rear end portion thereof corresponds to a "distal end portion".

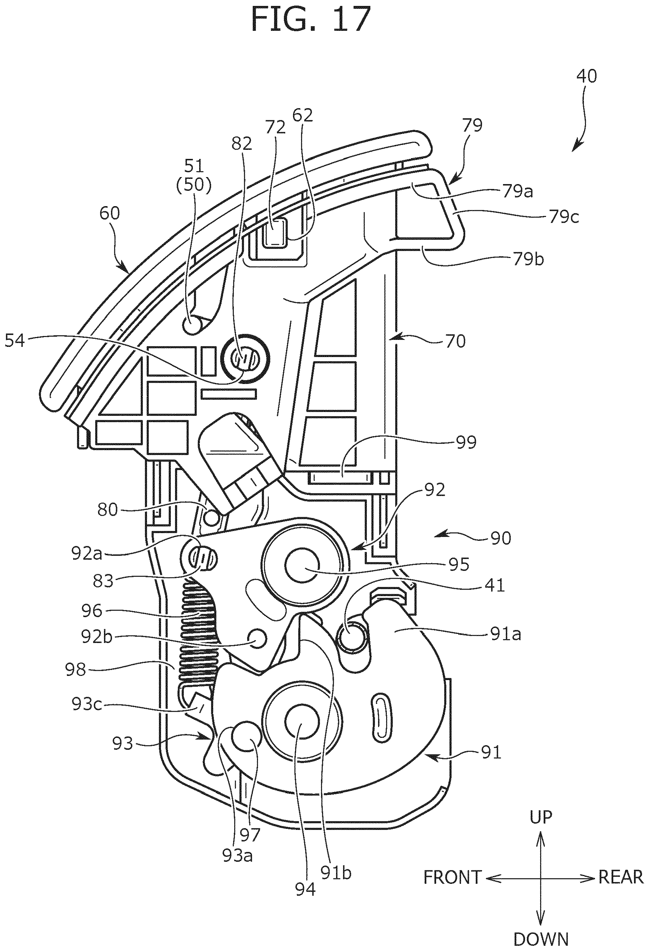

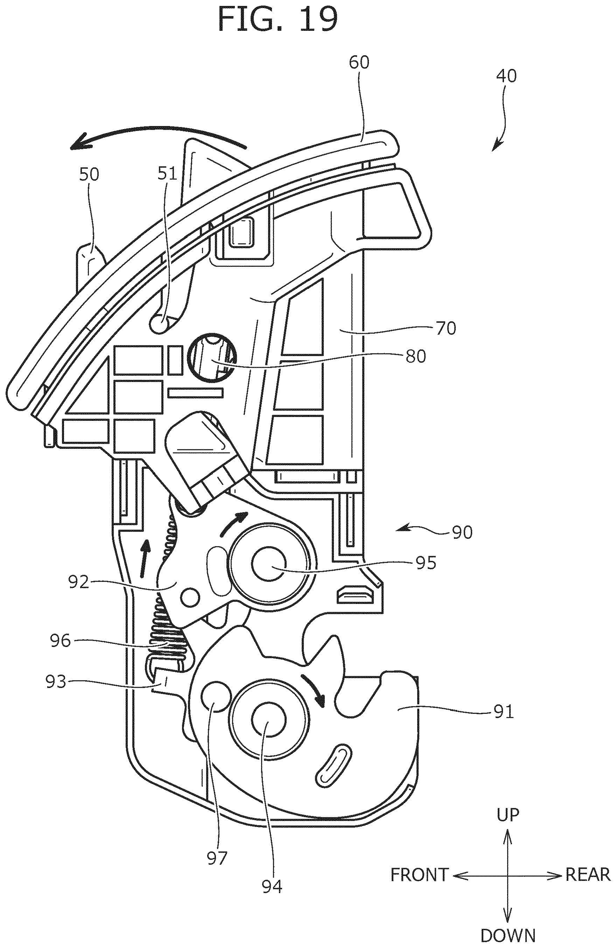

The operation lever 50 is attached to be rotatable between a "normal position (lock position)" shown in FIGS. 3 and 17 and a "rotated position (unlock position)" shown in FIG. 19 that is rotated from the normal position.

Incidentally, the operation lever 50 is biased from a rotated position side to a normal position side by the connecting link 80 interposed between the operation lever 50 and the lock device 90.

As shown in FIGS. 3 to 5, the operation lever 50 includes an upper wall portion 50a forming an outer surface of the operation lever 50 and curvedly extending in the seat front to rear direction; a front wall portion 50b extending downward from a front end portion of the upper wall portion 50a; right and left side wall portions 50c extending downward from right and left side portions of the upper wall portion 50a, and connecting the upper wall portion 50a and the front wall portion 50b; right and left second side wall portions 50d extending downward from the right and left side wall portions 50c; a bottom wall portion 50e connecting the right and left second side wall portions 50d, and protruding from the right and left second side wall portions 50d toward the seat rear; and a reinforcing wall portion 50f connecting the right and left second side wall portions 50d and the bottom wall portion 50e.

The operation lever 50 includes the right and left lever rotating shafts 51 formed on the right and left side wall portions 50c, and protruding outward from the respective side wall portions 50c in the seat width direction.

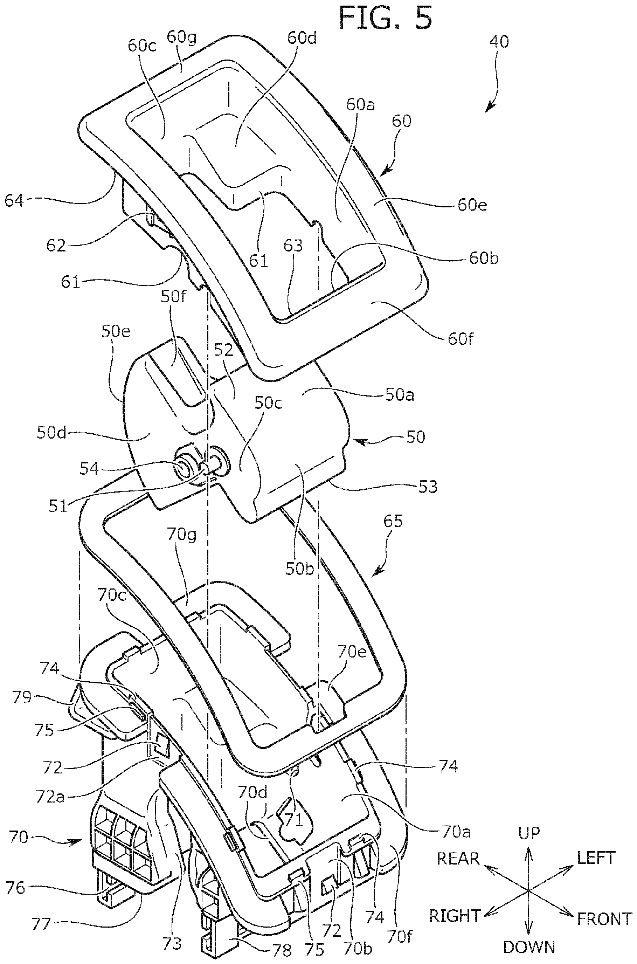

As shown in FIGS. 5, 6, and 10, the right and left lever rotating shafts 51 penetrate through the cover member 60, and are supported by shaft support portions 71 formed on the right and left sides of the lever attachment member 70.

The operation lever 50 includes a lever operation portion 52 which is formed by a rear end portion of the upper wall portion 50a and rear end portions of the right and left side wall portions 50c, and onto which the occupant hooks the fingers. The lever operation portion 52 is formed to be substantially flush with an upper surface of the cover member 60.

In addition, the operation lever 50 includes a lever restriction portion 53 that is formed at the front end portion of the upper wall portion 50a, and that restricts the rotational operation of the operation lever 50. The lever restriction portion 53 is disposed to be able to come into contact with a lever contact portion 63 formed at a front end portion of the cover member 60, and restricts the operation of the operation lever 50 by coming into contact with the lever contact portion 63.

The operation lever 50 includes right and left engagement portions 54 (link engagement portions) formed on the right and left second side wall portions 50d, and protruding outward from the respective second side wall portions 50d in the seat width direction.

As shown in FIGS. 5, 6, and 10, the right and left engagement portions 54 penetrate through the cover member 60, face an opening portion 73 of the lever attachment member 70, and are connected to a lever engagement portion 82 of the connecting link 80.

Specifically, the right and left engagement portions 54 are engagement holes having a recessed shape, and are connected to the lever engagement portion 82 (lever engagement protrusion) having a protruding shape.

As shown in FIGS. 3 to 6, the cover member 60 is a cover plate that supports the operation lever 50, and is attached to the lever attachment member 70 in a state where the cover member 60 is accommodated in the lever attachment member 70.

Specifically, the cover member 60 is configured to sandwich a part of the skin material 1b (an outer peripheral portion of an opening hole formed in the skin material 1b) between the cover member 60 and the lever attachment member 70. By doing so, the aesthetic of the appearance of the periphery of the operation lever 50 is improved.

As shown in FIG. 5, the cover member 60 has a box shape of which the bottom surface is open.

In a detailed description, the cover member 60 includes right and left side wall portions 60a disposed at a predetermined interval in the seat width direction; a front wall portion 60b connecting front end portions of the right and left side wall portions 60a; a rear wall portion 60c connecting rear end portions of the right and left side wall portions 60a; and a bottom wall portion 60d connecting respective lower end portions of the right and left side wall portions 60a and the rear wall portion 60c.

In addition, the cover member 60 includes right and left side flange portions 60e projecting outward from upper end portions of the right and left side wall portions 60a in the seat width direction; a front flange portion 60f projecting forward from an upper end portion of the front wall portion 60b; and a rear flange portion 60g projecting rearward from an upper end portion of the rear wall portion 60c.

A cover opening portion 61 having a substantially L shape and penetrating through the cover member 60 in the up to down direction is formed at a front portion and a right side portion of the bottom wall portion 60d of the cover member 60.

The cover opening portion 61 is an opening hole formed by cutting out from the bottom wall portion 60d to lower portions of the right and left side wall portions 60a.

The operation lever 50 is assembled such that a lower portion of the operation lever 50 penetrates through the cover member 60 through the cover opening portion 61. In addition, the lever rotating shafts 51 and the engagement portions 54 are assembled to penetrate through the cover member 60.

As shown in FIG. 5, the cover member 60 includes right and left cover engagement holes 62 and a front cover engagement hole 62 that protrude outward from right and left side wall portions 70a and the front wall portion 60b, respectively, and that engage with the lever attachment member 70 (engagement protrusions 72).

The right and left cover engagement holes 62 (engaged portions) are engaged with the engagement protrusions 72 (engagement portions) of the lever attachment member 70 in the seat width direction. The front cover engagement holes 62 are engaged with the engagement protrusions 72 in the front to rear direction.

Incidentally, in the cover member 60, a connecting portion between the front wall portion 60b and the front flange portion 60f serves as the lever contact portion 63 that comes into contact with the operation lever 50 (lever restriction portion 53).

The cover member 60 includes support projections 64 formed on bottom surfaces of inner end portions of the right and left side flange portions 60e, the front flange portion 60f, and the rear flange portion 60g, protruding toward a lever attachment member 70 side, and supported by cover support portions 74.

A plurality of the support projections 64 are formed at intervals along the edge portions (inner edge portions) of the flange portions 60e, 60f, and 60g.

In the above-described configuration, as shown in FIG. 1, the operation lever 50 and the cover member 60 are assembled to the back frame 10 (lever attachment member 70) so as to be partially exposed from the outer surface of the seat back 1.

When the operation lever 50 is at the lock position, the outer surface of the seat back 1, the outer surface of the operation lever 50, and an outer surface of the cover member 60 are substantially flush with each other.

By doing so, the operation lever 50 can be compactly disposed at the upper portion of the seat back 1 without impairing the design of the conveyance seat S.

As shown in FIGS. 3 to 9, a plate member 65 is a frame-shaped plate body that holds the skin material 2b, and is attached onto the lever attachment member 70.

The plate member 65 is provided between the cover member 60 and the lever attachment member 70 in the up to down direction, and is disposed to surround the operation lever 50.

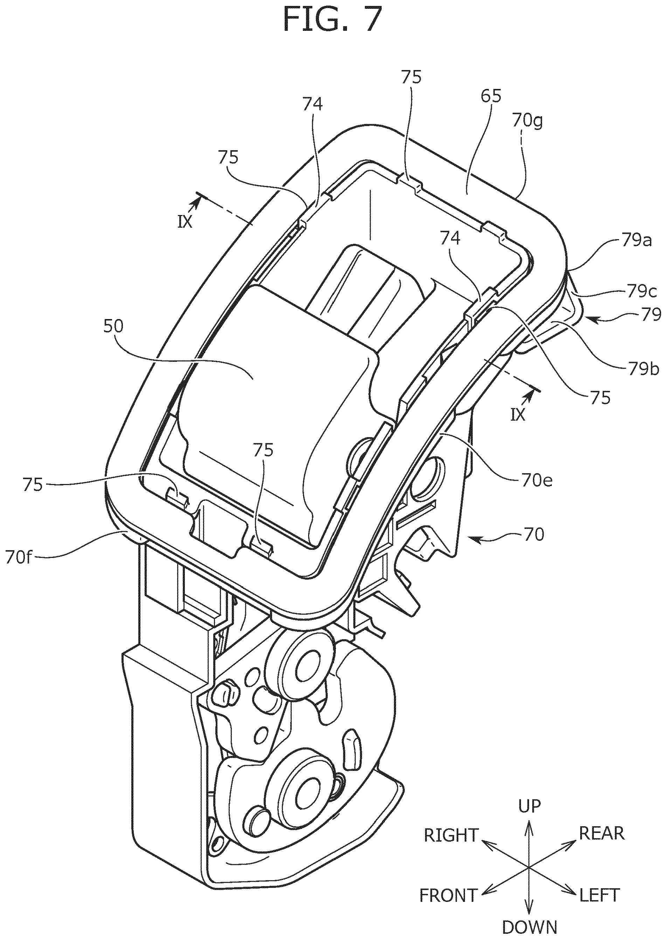

Specifically, as shown in FIG. 7, the plate member 65 is supported from below by side flange portions 70e, a front flange portion 70f, and a rear flange portion 70g of the lever attachment member 70. In addition, the plate member 65 is supported from the sides by plate support portions 75 of the lever attachment member 70.

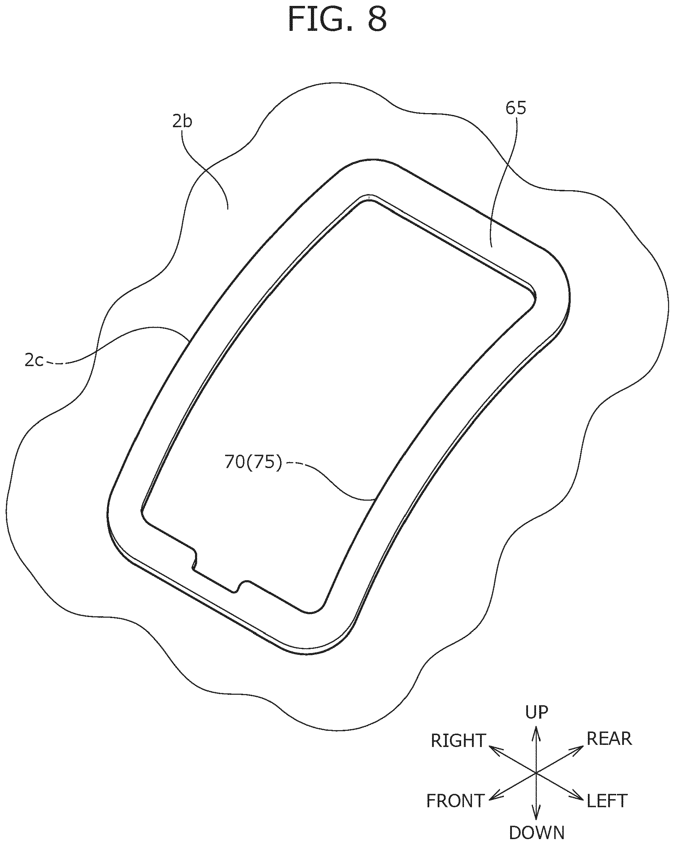

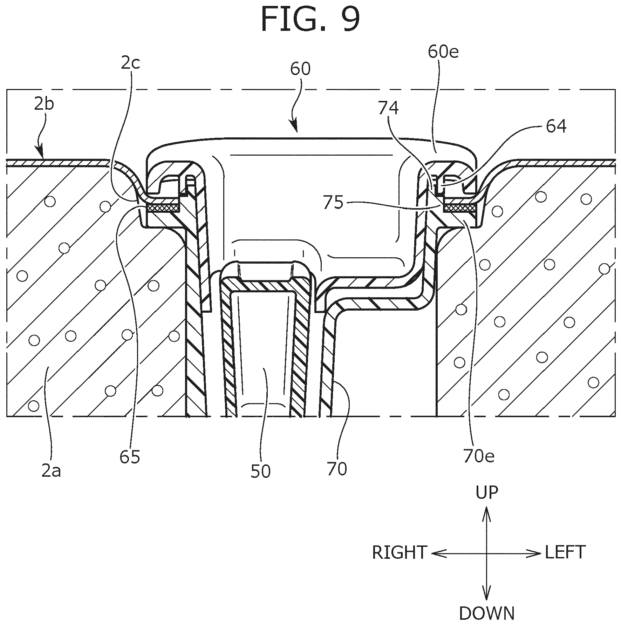

As shown in FIGS. 8 and 9, the plate member 65 supports the skin material 2b from below. Specifically, the plate member 65 and the cover member 60 sandwich an outer peripheral portion of a skin opening hole 2c of the skin material 2b in the up to down direction.

Incidentally, the operation lever 50 is attached to be exposed from the skin opening hole 2c formed on an outer surface of the skin material 2b.

As shown in FIGS. 3 to 6, the lever attachment member 70 is a housing plate that rotatably supports the operation lever 50, and is attached to a side position of the upper portion of the back frame 10.

As shown in FIG. 5, the lever attachment member 70 has a box shape.

In a detailed description, the lever attachment member 70 includes the right and left side wall portions 70a disposed at an interval in the seat width direction; a front wall portion 70b connecting front end portions of the right and left side wall portions 70a; a rear wall portion 70c connecting rear end portions of the right and left side wall portions 70a; and a bottom wall portion 70d connecting respective lower end portions of the right and left side wall portions 70a, the front wall portion 70b, and the rear wall portion 60c.

In addition, the lever attachment member 70 includes the right and left side flange portions 70e projecting outward from upper end portions of the right and left side wall portions 70a in the seat width direction; a front flange portion 70f projecting forward from an upper end portion of the front wall portion 70b; and a rear flange portion 70g projecting rearward from an upper end portion of the rear wall portion 70c.

The lever attachment member 70 includes the right and left shaft support portions 71 (shaft support holes) formed at front portions of the right and left side wall portions 70a, and supporting the lever rotating shafts 51.

In addition, the lever attachment member 70 includes the right and left engagement protrusions 72 that are formed at rear portions of the right and left side wall portions 70a, that protrude outward from the respective side wall portions 70a in the seat width direction, and that engage with the cover engagement holes 62.

In addition, the lever attachment member 70 includes the opening portion 73 provided at central portions of the right and left side wall portions 70a, and formed at positions facing the engagement portions 54 of the operation lever 50.

The opening portion 73 is an opening hole that is formed by cutting out upward from the lower end portions of the right and left side wall portions 70a, and that is long in the up to down direction, and the connecting link 80 (an upper portion of the connecting link 80) can be inserted into the opening portion 73 from the outside in the seat width direction.

By using the opening portion 73, the connecting link 80 (lever engagement portion 82) can be connected to the engagement portions 54 of the operation lever 50.

As shown in FIG. 5, the lever attachment member 70 includes the cover support portions 74 that are formed on upper surfaces of respective inner end portions of the flange portions 70e, 70f, and 70g, that protrude toward a cover member 60 side, and that are assembled to the support projections 64 of the cover member 60.

A plurality of the cover support portions 74 are assembly projections, and are formed at intervals along edge portions (inner edge portions) of the flange portions 70e, 70f, and 70g.

As shown in FIGS. 5 and 7, the lever attachment member 70 includes the plate support portions 75 that are formed on the upper surfaces of the respective inner end portions of the flange portions 70e, 70f, and 70g, that protrude toward the plate member 65 side, and that support the plate member by coming into contact with an inner surface of the plate member 65.

The plate support portions 75 are provided adjacent to the cover support portions 74, and specifically, are disposed outside the cover support portions 74.

A plurality of the plate support portions 75 are formed at intervals along the inner surface of the plate member 65, and extend along the inner surface of the plate member 65.

As shown in FIGS. 5, 6, and 10, the lever attachment member 70 includes fitting portions 76, 77, and 78 (fitting holes) that are formed at the lower end portions of the right and left side wall portions 70a, and that are fitted to fitted portions 98b, 98c, and 99b (fitting protrusions) provided in the lock covers 98 and 99.

The first fitting portion 76 is fitted to the first fitted portion 98b located at an upper end portion of the first lock cover 98.

The second fitting portion 77 is disposed at a position behind the first fitting portion 76, and is fitted to the second fitted portion 99b located at an upper end portion of the second lock cover 99.

The third fitting portion 78 is disposed at a position behind the second fitting portion 77, and is fitted to the third fitted portion 98c located at the upper end portion of the first lock cover 98.

As shown in FIGS. 7 and 17, the lever attachment member 70 includes a projecting portion 79 projecting from the rear wall portion 70c of the lever attachment member 70 toward a seat rear side.

The projecting portion 79 is a portion that supports the skin material 2b by coming into contact with the outer peripheral portion of the skin opening hole 2c of the skin material 2b.

The projecting portion 79 is formed in a hollow shape in a seat side view.

Specifically, the projecting portion 79 includes an upper wall portion 79a and a bottom wall portion 79b disposed at different positions in the up to down direction and projecting from a rear surface of the rear wall portion 70c toward the seat rear side, and a support wall portion 79c connecting a rear end portion of the upper wall portion 79a and a rear end portion of the bottom wall portion 79b and supporting the skin material 2b.

In the above-described configuration, as shown in FIGS. 5 and 7, the plate support portions 75 located at an uppermost position among the plurality of plate support portions 75 are disposed at a position higher than a body portion of the lever attachment member 70.

By doing so, the plate member 65 can be more firmly assembled to the lever attachment member 70.

In the above-described configuration, as shown in FIG. 5, the lever attachment member 70 includes the engagement protrusions 72 that engage with cover engagement holes 62 (engaged portions) provided on an outer surface of the cover member 60. A plurality of the engagement protrusions 72 are disposed between the plurality of plate support portions 75.

By doing so, the cover member 60 can be stably engaged with the lever attachment member 70.

In the above-described configuration, as shown in FIG. 5, the lever attachment member 70 includes positioning portions 72a that are formed around the engagement protrusions 72, and that position the cover engagement holes 62 at positions where the cover engagement holes 62 are engaged with the engagement protrusions 72. The positioning portions 72a are positioning recesses having a recessed shape.

By doing so, the cover member 60 can be easily engaged with the lever attachment member 70.

### <<Connecting link (connecting member)>>

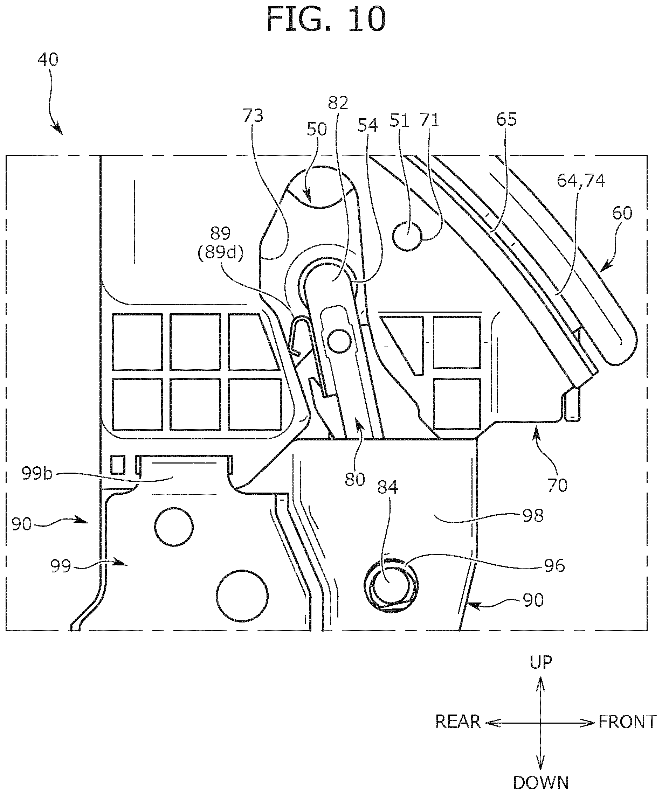

As shown in FIGS. 10 to 15, the connecting link 80 is a resin connecting member that connects the operation lever 50 and the lock device 90 (transmission member 92), and that acts to switch the lock device 90 from a locked state to an unlocked state in response to the operation of the operation lever 50.

The connecting link 80 is held by the position holding member 89 having a plate shape and having flexibility.

The connecting link 80 extends long between the operation lever 50 and the lock device 90 in the up to down direction, is connected to the operation lever 50 and the lock device 90, and is housed in the lever attachment member 70.

In a detailed description, as shown in FIG. 10, the upper portion of the connecting link 80 enters the lever attachment member 70 through the opening portion 73 formed on an outer surface of the lever attachment member 70, and is connected to the operation lever 50 (engagement portions 54) .

In addition, a lower portion of the connecting link 80 is covered from the sides by lock covers 98 and 99, and is connected to the lock device 90 (the transmission member 92 and a biasing spring 96).

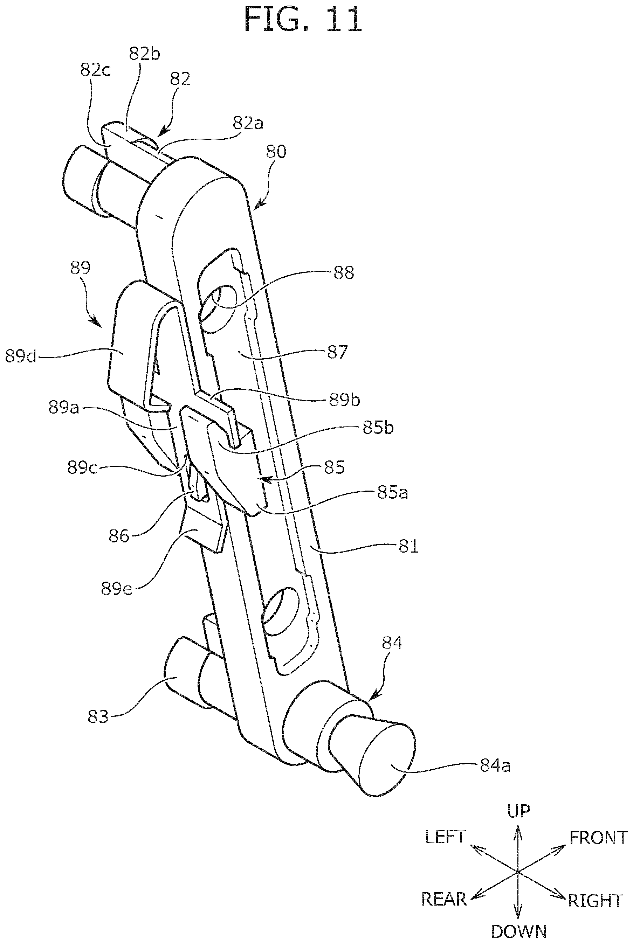

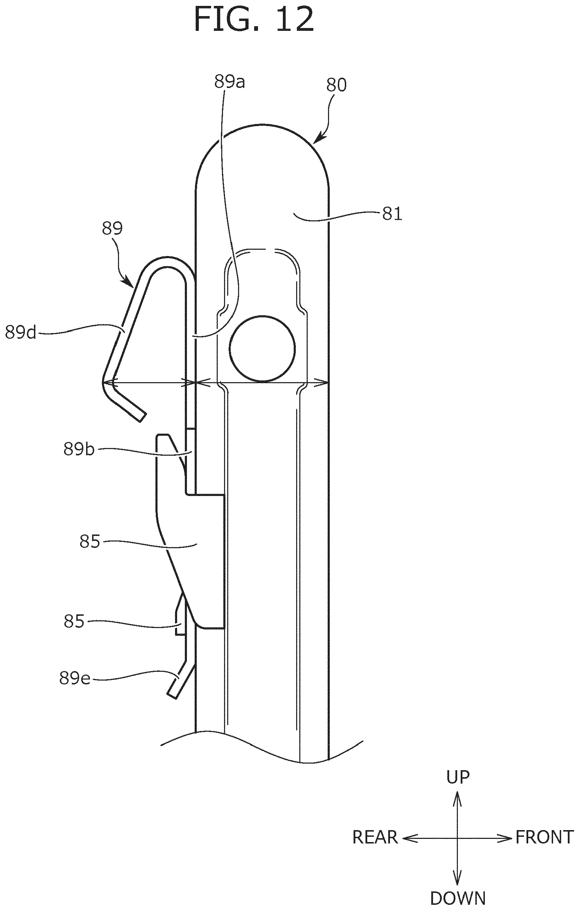

Specifically, as shown in FIGS. 11 and 12, the connecting link 80 includes a body portion 81 that is long in the up to down direction; the lever engagement portion 82 that protrudes from a side surface (left side surface) of an upper portion of the body portion 81, and that engages with the operation lever 50 (engagement portions 54); a lock connecting portion 83 protruding from a side surface (left side surface) of a lower portion of the body portion 81, and connected to the lock device 90 (transmission member 92); and a spring assembly portion 84 which protrudes from a side surface (right side surface) on an opposite side of the lower portion of the body portion 81 from a lock connecting portion 83 side, and to which the biasing spring 96 is assembled.

In addition, the connecting link 80 further includes attachment portions 85 which protrude rearward from right and left side surfaces of a central portion of the body portion 81, and to which the position holding member 89 is attached, and an engagement protrusion 86 (engagement portion) that protrudes rearward from a rear surface of the central portion of the body portion 81, and that is engaged with an engagement hole 89c (engaged portion) of the position holding member 89.

As shown in FIGS. 10, 11, and 13, the lever engagement portion 82 is, for example, an engagement projection having a snap-fit shape that protrudes from the side surface of the body portion 81 toward the operation lever 50, and that engages with the engagement portions 54.

Specifically, the lever engagement portion 82 includes an engagement body portion 82a having a substantially elliptical cross-section with a long axis in the up to down direction, and an engagement pawl 82b further protruding from a distal end portion of the engagement body portion 82a and formed to expand outward in a width direction of the engagement body portion 82a.

A slit hole 82c formed along a protruding direction of the lever engagement portion 82 is formed at a central portion of the lever engagement portion 82 in the width direction.

In the above-described configuration, in the engagement portions 54 (engagement holes) of the operation lever 50, a width in an extending direction (up to down direction) of the connecting link 80 is larger than a width in a direction intersecting the extending direction of the connecting link 80 (front to rear direction).

Namely, the engagement portions 54 have a hole shape corresponding to the shape (elliptical shape that is long up and down) of the lever engagement portion 82. More specifically, the width of the engagement portions 54 in the up to down direction is formed to be slightly larger than a width of the lever engagement portion 82 in the up to down direction.

By doing so, the connecting link 80 can be easily attached to the operation lever 50. Namely, the connecting link 80 can be attached to the operation lever 50 while adjusting the position of the connecting link 80 in the up to down direction. In addition, after the connecting link 80 is attached, the connecting link 80 can be firmly connected by snap-fitting.

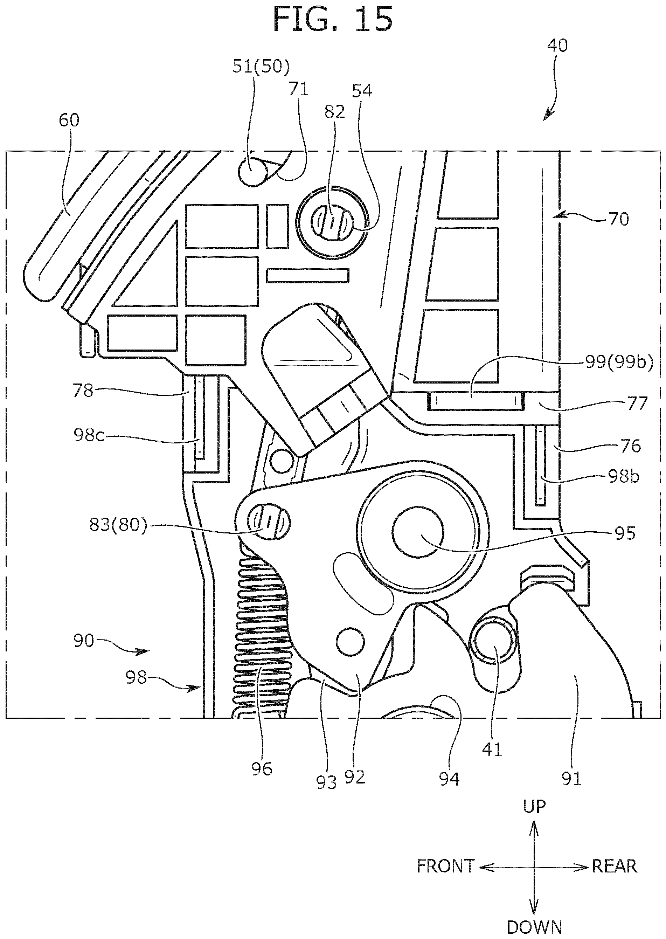

As shown in FIGS. 11 and 15, the lock connecting portion 83 is, for example, a connecting projection having a snap-fit shape that protrudes from the side surface of the body portion 81 toward the transmission member 92, and that engages with a connecting hole 92a.

Incidentally, the lock connecting portion 83 has the same shape as the lever engagement portion 82, and includes an engagement body portion 83a, an engagement pawl 83b, and a slit hole 83c.

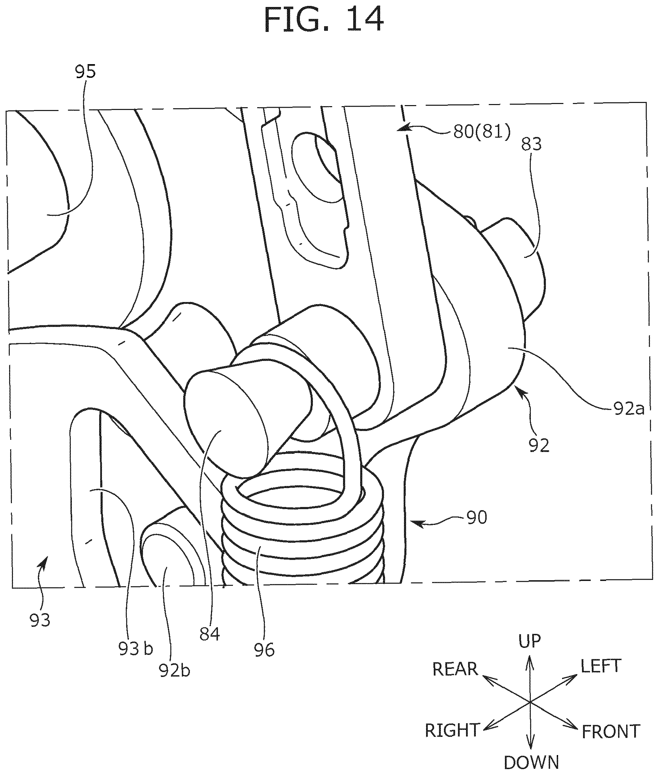

As shown in FIGS. 11 and 14, the spring assembly portion 84 is an assembly projection that protrudes from the side surface of the body portion 81 toward the biasing spring 96, and that is assembled to an upper end portion of the biasing spring 96.

The spring assembly portion 84 is formed to become wider as the spring assembly portion 84 extends toward a protruding distal end portion 84a thereof. A portion of the spring assembly portion 84, to which the biasing spring 96 is assembled, is narrower than the protruding distal end portion 84a.

By doing so, the biasing spring 96 is less likely to come off from the spring assembly portion 84 in an attachment direction of the biasing spring 96.

As shown in FIGS. 11 and 12, the attachment portions 85 have a hook shape, and include right and left attachment body portions 85a protruding rearward from the right and left side surfaces of the body portion 81, and hook portions 85b protruding upward from distal end portions of the right and left attachment body portions 85a.

With the above-described configuration, the position holding member 89 can be attached to the attachment portions 85 from above. The attachment portions 85 can support the position holding member 89 from below. In addition, the body portion 81 and the attachment portions 85 can hold the position holding member 89 such that the position holding member 89 is sandwiched therebetween in the seat front to rear direction.

The engagement protrusion 86 is provided between the attachment portions 85 (right and left attachment body portions 85a), and is disposed at a position slightly lower than the attachment portions 85.

The position holding member 89 (engagement hole 89c) can be attached to the engagement protrusion 86 from the rear. The engagement protrusion 86 can hold the position holding member 89 so as not to be misaligned in the seat width direction. Furthermore, the attachment portions 85 and the engagement protrusion 86 can hold the position holding member 89 such that the position holding member 89 is sandwiched therebetween in the seat width direction.

In the above-described configuration, as shown in FIG. 11, the connecting link 80 further includes a reinforcing portion 87 formed on the side surface of the body portion 81 in the seat width direction, and extending along the extending direction of the connecting link 80.

The reinforcing portion 87 is a reinforcing recess having a recessed shape.

In this case, the lever engagement portion 82, the lock connecting portion 83, and the spring assembly portion 84 are disposed at positions different from that of the reinforcing portion 87 in the up to down direction.

By doing so, the rigidity of the entirety of the connecting link 80 can be increased in a well-balanced manner. In addition, in the connecting link 80, the thicknesses of the lever engagement portion 82, the lock connecting portion 83, and the spring assembly portion 84 can be ensured.

In the above-described configuration, as shown in FIG. 11, through-holes 88 penetrating through the connecting link 80 (body portion 81) are formed in the reinforcing portion 87.

The through-holes 88 and the spring assembly portion 84 (lock connecting portion 83) are disposed side by side on the side surface of the connecting link 80.

By doing so, the weight of the connecting link 80 can be reduced by the through-holes 88. Particularly, the weight of the connecting link 80 can be reduced while avoiding portions of the connecting link 80 in which the spring assembly portion 84 and the lock connecting portion 83 are formed.

### <<Position holding member>>

As shown in FIGS. 10 to 13, the position holding member 89 is a resin plate-shaped member having flexibility, and extends long in the extending direction (up to down direction) of the connecting link 80, and is attached only to the connecting link 80 to be aligned along the connecting link 80.

The position holding member 89 bends in a direction orthogonal to an extending direction (up to down direction) of the position holding member 89 to hold the position of the connecting link 80.

The position holding member 89 is stored in and attached to the connecting link 80 (attachment portions 85).

The position holding member 89 includes a body portion 89a disposed along an outer surface (rear surface) of the connecting link 80, and extending in the up to down direction; right and left protruding portions 89b protruding outward from a central portion of the body portion 89a to the right and left, and attached to the connecting link 80 (attachment portions 85); and the engagement hole 89c that is formed at a central portion of the body portion 89a at a position slightly lower than the protruding portions 89b, and that engages with the engagement protrusion 86.

In addition, the position holding member 89 further includes a flexible portion 89d formed by bending an upper end portion of the body portion 89a toward the rear side, and a bent portion 89e formed by bending a lower end portion of the body portion 89a toward the rear side.

In a detailed description, the flexible portion 89d is formed by folding the upper end portion of the body portion 89a toward the rear side, and is disposed at a position facing the body portion 89a in the seat front to rear direction. In addition, the flexible portion 89d is disposed at a position facing the connecting link 80 in the seat front to rear direction.

In the above-described configuration, as shown in FIG. 12, a length of the position holding member 89 in the seat front to rear direction is shorter than a length of the connecting link 80 in the seat front to rear direction.

By doing so, the position holding member 89 can be compactly disposed.

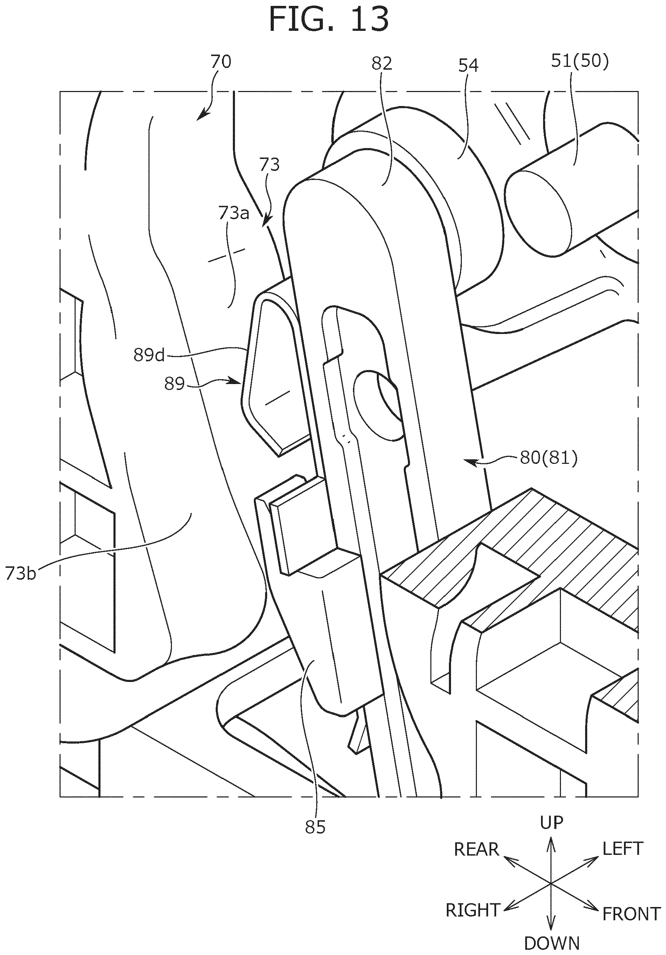

In the above-described configuration, as shown in FIGS. 10 and 13, the position holding member 89 passes through the opening portion 73 of the lever attachment member 70 to be disposed thereinside, together with the connecting link 80. The lever engagement portion 82 of the connecting link 80 is engaged with the operation lever 50 (engagement portions 54) .

In this case, the opening portion 73 is formed to become wider as the opening portion 73 becomes farther from the operation lever 50 in the seat width direction.

By doing so, assembling the connecting link 80 to the operation lever 50 is facilitated by using the opening portion 73.

In the above-described configuration, as shown in FIG. 13, an inner surface of the opening portion 73 of the lever attachment member 70 has a first inner surface 73a formed in a planar shape, and a second inner surface 73b provided outside the first inner surface 73a in the seat width direction, and formed to expand in an inclined shape.

The flexible portion 89d of the position holding member 89 comes into contact with the first inner surface 73a of the opening portion 73 and bends to hold the position of the connecting link 80.

By doing so, the position holding member 89 can suitably hold the position of the connecting link 80.

In the above-described configuration, as shown in FIG. 11, the position holding member 89 is disposed between a portion of the connecting link 80 which is assembled to the lock device 90 (lock connecting portion 83) and a portion thereof which is engaged with the operation lever 50 (lever engagement portion 82).

By doing so, the position holding member 89 can hold the position of the connecting link 80 in a well-balanced manner.

In the above-described configuration, as shown in FIG. 11, in the connecting link 80, the body portion 81, the lever engagement portion 82, the lock connecting portion 83, and the spring assembly portion 84 are integrally formed.

By doing so, the number of the components of the switching device 40 can be reduced.

Incidentally, in the present embodiment, the connecting link 80 and the position holding member 89 are formed as separate bodies, but are not particularly limited thereto.

As a modification example, the connecting link 80 and the position holding member 89 may be integrally formed from the same material (same resin material).

By doing so, the number of the components can be reduced.

### <<Lock device>>

As shown in FIGS. 3, 6, and 17 to 19, the lock device 90 includes a lock member 91 that is attached to be rotatable about a lock rotating shaft 94 extending in the seat width direction, and that is detachably engaged with the striker 41 shown in FIG. 17; the transmission member 92 that is disposed higher than the lock member 91, that is attached to be rotatable about a second lock rotating shaft 95 extending in the seat width direction, and that transmits the operation of the operation lever 50 (connecting link 80) to the lock member 91; and a second transmission member 93 that is disposed inside the lock member 91 (transmission member 92) in the seat width direction, and that transmits the operation of the transmission member 92 to the lock member 91.

In addition, the lock device 90 further includes the biasing spring 96 that is disposed at a position lower than the connecting link 80, that is assembled to the connecting link 80, and that biases the connecting link 80 toward the lock member 91.

The lock member 91 and the transmission member 92 are disposed at positions overlapping each other in the seat width direction.

The transmission member 92 is connected to the operation lever 50 via the connecting link 80, and rotates upon the operation of the operation lever 50. The second transmission member 93 rotates upon the rotational operation of the transmission member 92. The lock member 91 rotates between the "lock position" and the "unlock position" upon the rotational operation of the second transmission member 93.

Details of the lock member 91, the transmission member 92, and the second transmission member 93 will be described later.

### <<Lock cover>>

As shown in FIGS. 3, 4, and 6, the lock covers 98 and 99 are covers that cover the lock member 91, the transmission member 92, the second transmission member 93, and the biasing spring 96 from the sides.

The lock covers 98 and 99 are disposed at a position lower than the lever attachment member 70, and are assembled to the side surface (right side surface) of the lever attachment member 70 in the seat width direction.

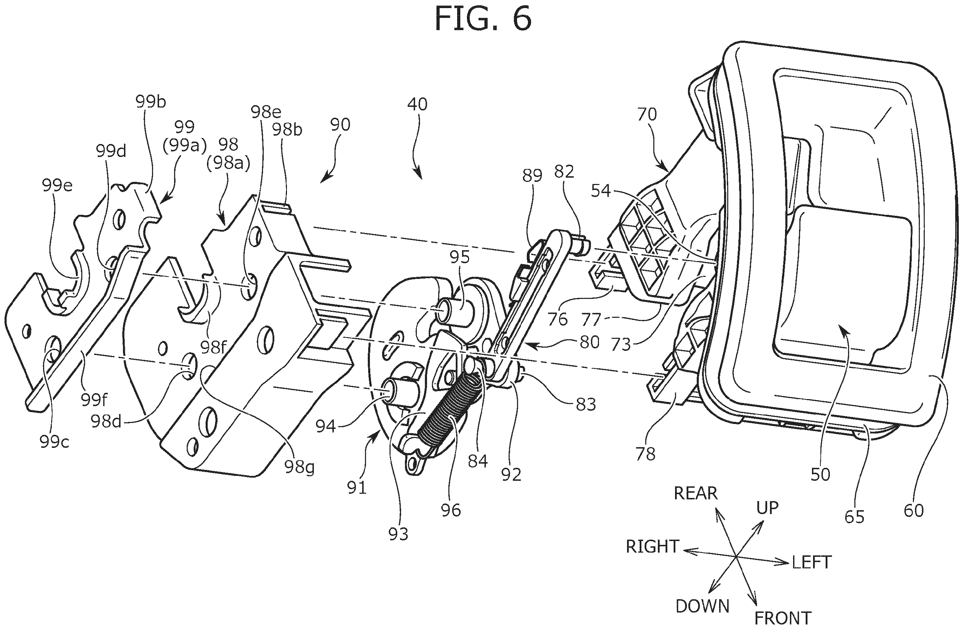

In a detailed description, as shown in FIG. 6, the first lock cover 98 is assembled to the lever attachment member 70, and supports the lock rotating shaft 94 and the second lock rotating shaft 95.

In addition, the second lock cover 99 is disposed outside the first lock cover 98, is assembled to the lever attachment member 70 and the first lock cover 98, and supports the lock rotating shaft 94 and the second lock rotating shaft 95.

As shown in FIGS. 3, 4, and 6, the first lock cover 98 is a box-shaped resin cover, and includes a body portion 98a; the first fitted portion 98b protruding from a rear portion of an upper end portion of the body portion 98a toward the lever attachment member 70, and fitted to the first fitting portion 76; and the third fitted portion 98c protruding from a front portion of the upper end portion of the body portion 98a toward the lever attachment member 70, and fitted to the third fitting portion 78.

In addition, the first lock cover 98 further includes a shaft support hole 98d formed on a side surface of the body portion 98a, and supporting the lock rotating shaft 94; a second shaft support hole 98e formed on the side surface of the body portion 98a at a position higher than the shaft support hole 98d, and supporting the second lock rotating shaft 95; and a cover assembly portion 98f and a second cover assembly portion 98g formed on the side surface of the body portion 98a, and assembled to the second lock cover 99 (an assembled portion 99e and a second assembled portion 99f), respectively.

The cover assembly portion 98f is an assembly projection, and is disposed between the shaft support hole 98d and the second shaft support hole 98e in the up to down direction, and is disposed between the first fitted portion 98b and the third fitted portion 98c in the front to rear direction.

The second cover assembly portion 98g extends long in the up to down direction, and is disposed between the first fitted portion 98b and the third fitted portion 98c in the front to rear direction.

The second lock cover 99 is a plate-shaped metal cover, and includes a body portion 99a; the second fitted portion 99b protruding from an upper end portion of the body portion 99a toward the lever attachment member 70, and fitted to the second fitting portion 77; and a shaft support hole 99c supporting the lock rotating shaft 94 and a second shaft support hole 99d supporting the second lock rotating shaft 95, which are formed on a side surface of the body portion 99a.

In addition, the second lock cover 99 further includes the assembled portion 99e and the second assembled portion 99f formed on the side surface of the body portion 99a, and assembled to the first lock cover 98 (the cover assembly portion 98f and the second cover assembly portion 98g), respectively.

The assembled portion 99e is an assembly projection. The second assembled portion 99f is a bent portion formed by bending an end portion of the body portion 99a.

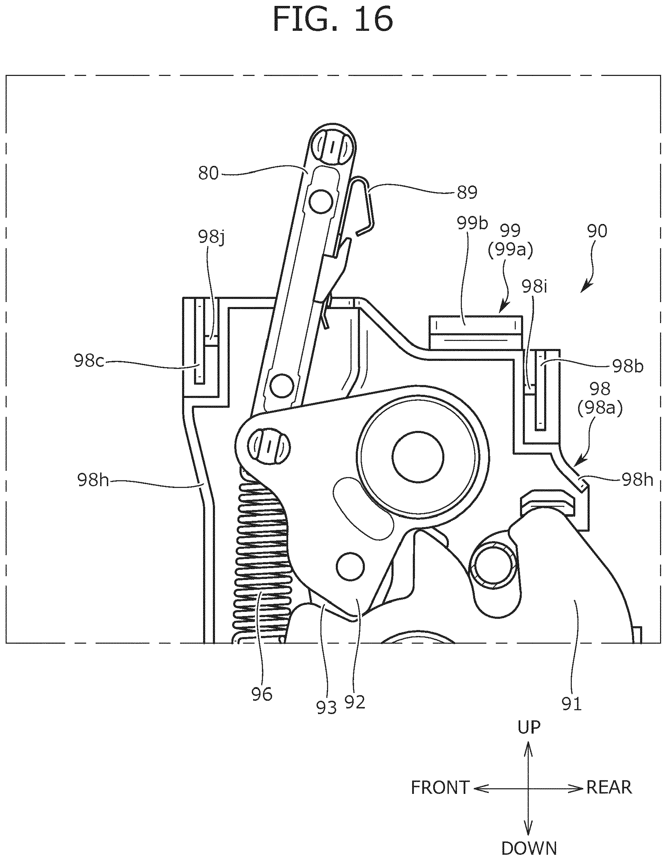

In the above-described configuration, as shown in FIGS. 15 and 16, the first fitting portion 76 (first fitted portion 98b) and the second fitting portion 77 (second fitted portion 99b) extend in respective directions orthogonal to a fitting direction (seat width direction) of the lock covers 98 and 99, and extend in directions intersecting (orthogonal to) each other.

In addition, the first fitting portion 76 and the second fitting portion 77 are arranged at different positions in the up to down direction, and are disposed at different positions in the seat front to rear direction.

By doing so, the strength of fitting of the lock covers 98 and 99 to the lever attachment member 70 can be improved.

In the above-described configuration, as shown in FIG. 16, the third fitting portion 78 (third fitted portion 98c) is disposed opposite to the side of the first fitting portion 76 (first fitted portion 98b) and the second fitting portion 77 (second fitted portion 99b) with respect to the connecting link 80.

In addition, the first fitting portion 76 and the third fitting portion 78 extend long in the same direction.

In addition, the second fitting portion 77 is disposed between the first fitting portion 76 and the third fitting portion 78 in the seat front to rear direction.

By doing so, the strength of fitting of the lock covers 98 and 99 to the lever attachment member 70 can be improved.

In the above-described configuration, as shown in FIGS. 6 and 15, the lever attachment member 70 and the lock covers 98 and 99 are assembled by fitting the first fitting portion 76, the second fitting portion 77, and the third fitting portion 78 in the same direction (seat width direction).

By doing so, the work of assembling the lock covers 98 and 99 to the lever attachment member 70 is facilitated. In addition, the automation of the assembly work is also facilitated.

In the above-described configuration, as shown in FIG. 16, the first lock cover 98 includes a cover flange 98h formed to protrude from a side surface of an outer edge portion of the first lock cover 98 toward a lock member 91 (transmission member 92) side, and disposed to surround the lock member 91 (transmission member 92).

The first fitting portion 76, the second fitting portion 77, and the third fitting portion 78 are disposed on the side surface of the first lock cover 98 outside the cover flange 98h.

In such a manner, the fitting strength of the first lock cover 98 can be increased by fitting an outer portion (outer edge portion) of the first lock cover 98 to the lever attachment member 70.

In the above-described configuration, as shown in FIG. 16, the first lock cover 98 includes a first reinforcing portion 98i connecting the cover flange 98h and the first fitted portion 98b and a second reinforcing portion 98j connecting the cover flange 98h and the third fitted portion 98c, each of which is formed to protrude from the side surface of the outer edge portion of the first lock cover 98 toward the lock member 91 side.

By doing so, the fitting strength of the fitted portions 98b and 98c can be increased.

### <<Lock structure of lock member>>

As shown in FIGS. 17 to 19, the lock member 91 is a member that rotates about the lock rotating shaft 94 between the "lock position" and the "unlock position" moved downward from the "lock position". When the lock member 91 is at the "lock position", the lock member 91 comes into contact with the transmission member 92, and the movement thereof is restricted by the transmission member 92, so that the lock member 91 is disposed at the lock position.

Specifically, the lock member 91 includes a striker engagement portion 91a that engages with the striker 41, and a contact portion 91b that is disposed opposite to the striker engagement portion 91a with the lock rotating shaft 94 interposed therebetween, and that comes into contact with the transmission member 92.

In addition, the lock member 91 is connected to the second transmission member 93 by a connecting pin 97 that is disposed opposite to the striker engagement portion 91a with the lock rotating shaft 94 interposed therebetween, and that extends in the seat width direction.

As shown in FIGS. 17 to 19, the transmission member 92 is a member that rotates about the second lock rotating shaft 95 to switch between a "restriction position" where the transmission member 92 restricts the movement of the lock member 91 and a "restriction release position" where the transmission member 92 is separated from the lock member 91.

Specifically, the transmission member 92 includes the connecting hole 92a connected to the connecting link 80 (lock connecting portion 83), and a projection 92b disposed opposite to (lower side) the connecting hole 92a with the second lock rotating shaft 95 interposed therebetween, and protruding to a second transmission member 93 side.

The transmission member 92 is connected to the second transmission member 93 by inserting the projection 92b into a projection insertion hole 93b formed in the second transmission member 93.

As shown in FIGS. 17 to 19, the second transmission member 93 is a member that is interposed between the lock member 91 and the transmission member 92, and that transmits the operation of the transmission member 92 to the lock member 91.

Specifically, the second transmission member 93 includes a pin support hole 93a that supports a connecting pin 97; the projection insertion hole 93b provided at a position higher than the pin support hole 93a, and connected to the projection 92b; and a spring support portion 93c provided between the pin support hole 93a and the projection insertion hole 93b, and supporting a lower end portion of the biasing spring 96.

In the above-described configuration, as shown in FIG. 17, when the operation lever 50 and the lock device 90 are at the "lock position", the operation lever 50 is stored in the lever attachment member 70, and the lock member 91 is engaged with the striker 41.

The transmission member 92 is in contact with the lock member 91, and holds the lock member 91.

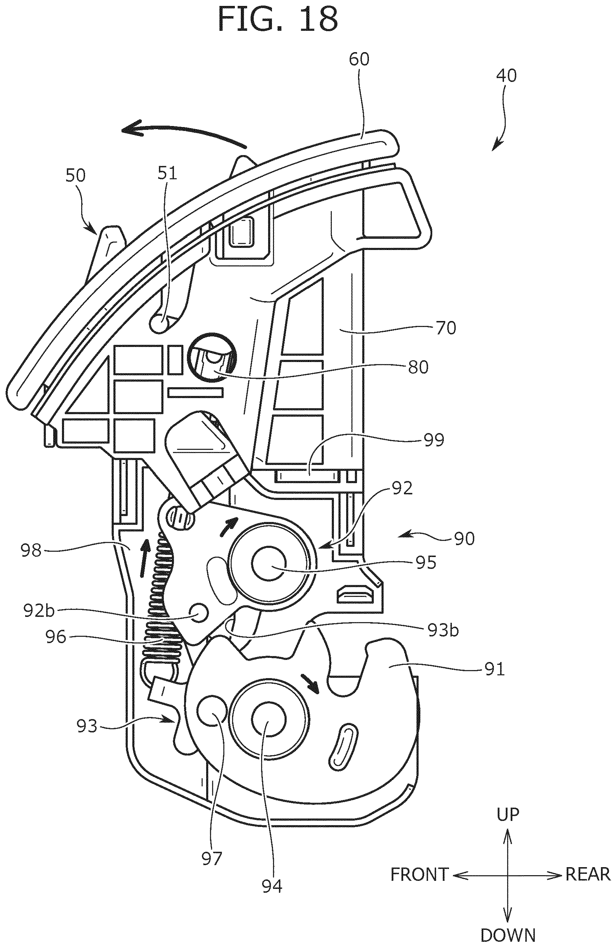

As shown in FIGS. 18 and 19, when the operation lever 50 is rotated toward the seat front side, the lock device 90 moves to the "unlock position" via an "intermediate position".

In a detailed description, first, the connecting link 80 is pulled upward upon the rotational operation of the operation lever 50, and is moved upward against the biasing force of the biasing spring 96.

Upon the upward movement of the connecting link 80, the transmission member 92 rotates upward about the second lock rotating shaft 95, and pulls the second transmission member 93 upward via the projection 92b. In this case, the transmission member 92 becomes separated from the lock member 91.

Upon the rotational operation of the transmission member 92, the second transmission member 93 moves upward and pulls the lock member 91 upward via the connecting pin 97.

Upon the upward movement of the second transmission member 93, the lock member 91 rotates about the lock rotating shaft 94, and moves to separate from the striker 41.

By doing so, the lock member 91 switches from the locked state, in which the lock member 91 is engaged with the striker 41, to the unlocked state.

Incidentally, when the operation lever 50 is released from the state where the operation lever 50 is operated by the occupant, the operation lever 50 returns to the position, at which the operation lever 50 is stored in the lever attachment member 70, again due to the biasing force of the biasing spring 96. In addition, the lock member 91 also returns to the position, at which the lock member 91 engages with the striker 41 (the position where the lock member 91 is engageable), again.

Namely, the operation lever 50 and the lock device 90 return to the "lock position".

### <<Others>>

In the above-described embodiment, the "movement state" of the seat body has been described as corresponding to the "storage state," but is not particularly limited thereto.

For example, the "movement state" may correspond to a "reclining state" where the seat body (seat back) is tilted rearward to a predetermined position. Alternatively, the "movement state" may correspond to a "front-rear movement state" where the seat body is moved from the normal state in the seat front to rear direction, or a "tip-up state" where the seat body (seat back) is flipped upward to a predetermined position.

In addition, for example, in a case where the conveyance seat S includes a height link device, the "movement state" may be a "height change state" where the height position of the seat body is changed.

In addition, for example, in a case where the conveyance seat S includes an ottoman device, the "movement state" may be an "ottoman deployed state" where a leg support member serving as a part of the seat body is deployed.

In the above-described embodiment, as shown in FIG. 1, the operation lever 50 is attached to the left portion of the upper surface of the seat back 1, but is not particularly limited thereto, and can be changed.

For example, the operation lever 50 may be attached to a right portion of the upper surface of the seat back 1, or may be attached to a left outer surface, a right outer surface, or a rear surface of the seat back 1.

In addition, for example, the operation lever 50 may be attached to a front surface, a bottom surface, or a rear surface of the seat cushion 2. Alternatively, the operation lever 50 may be attached to a left outer surface or a right outer surface of the seat cushion 2.

In the above-described embodiment, as shown in FIG. 3, the operation lever 50 is a lever that is long in the seat front to rear direction, and the lever rotating shafts 51 are supported at the front end portion (proximal end portion) of the operation lever 50, but are not particularly limited thereto, and can be changed.

For example, the lever rotating shaft may be supported at the rear end portion of the operation lever 50. In that case, the rear end portion of the operation lever 50 corresponds to the "proximal end portion", and the front end portion thereof corresponds to the "distal end portion".

In addition, for example, the operation lever 50 is a lever that is long in the seat width direction, and a lever rotating shaft that is long in the seat front to rear direction may be supported at one end portion of the operation lever 50 in the seat width direction. In that case, the one end portion of the operation lever 50 corresponds to the "proximal end portion", and the other end portion thereof corresponds to the "distal end portion".

In the above-described embodiment, as shown in FIG. 10, the biasing spring 96 is a biasing spring (tension spring) that is long in the up to down direction, but is not particularly limited thereto.

Namely, the biasing spring 96 can be changed as appropriate as long as the biasing spring 96 is a biasing member capable of biasing the connecting link 80 toward the lock device 90 side.

In the above-described embodiment, as shown in FIG. 19, the biasing spring 96 biases the connecting link 80 toward the lock device 90 side, but is not particularly limited thereto.

For example, the biasing spring 96 may bias the connecting link 80 toward an operation lever 50 side. In that case, the operation lever 50 may be operated to be pushed toward the lock device 90 side against the biasing force of the biasing spring 96 instead of being operated to a side opposite to the lock device 90 side as shown in FIGS. 14 to 16.

In the above-described embodiment, as shown in FIG. 6, the lock cover that covers the lock device 90 is divided into the first lock cover 98 and the second lock cover 99, but is not particularly limited thereto.

For example, the lock cover may be formed of one lock cover, or may be formed of a plurality of three or more lock covers.

In the above-described embodiment, as shown in FIGS. 15 and 16, the first fitted portion 98b of the first lock cover 98 and the second fitted portion 99b of the second lock cover 99 extend in directions orthogonal to each other, but are not particularly limited thereto, and may extend in the directions intersecting each other.

In the above-described embodiment, as shown in FIG. 7, the plate support portions 75 of the lever attachment member 70 support the plate member 65 by coming into contact with the inner surface of the plate member 65 having a frame shape, but are not particularly limited thereto.

For example, the plate support portions 75 may support the plate member 65 by coming into contact with an outer surface of the plate member 65.

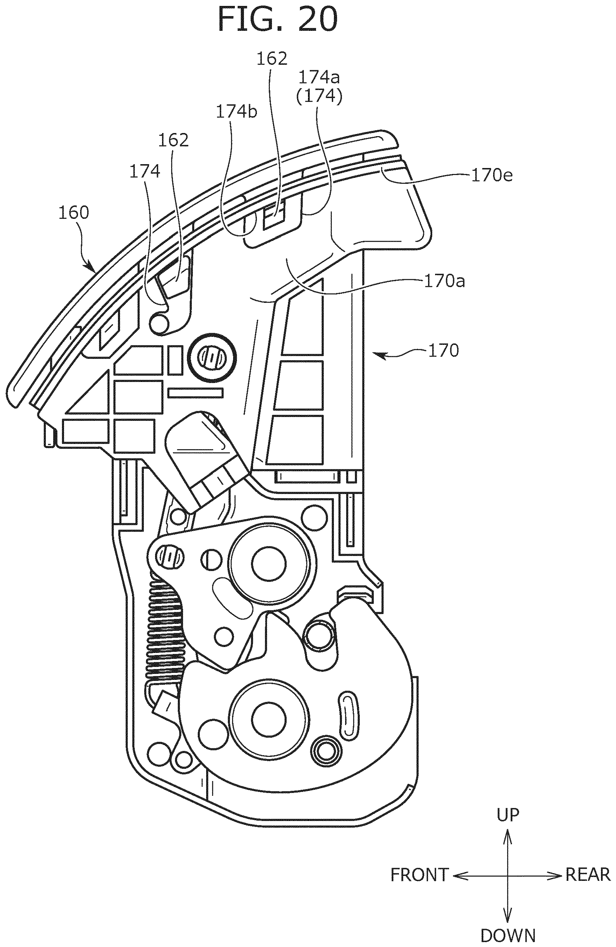

In the above-described embodiment, as in a modification example shown in FIG. 20, the cover member 60 and the lever attachment member 70 may be replaced with a cover member 160 and a lever attachment member 170, respectively.

The lever attachment member 170 includes a latching portion 174 latched to a latching pawl 162 provided on an outer surface of the cover member 160.

The latching portion 174 includes a latching hole 174a formed in a side wall portion 170a of the lever attachment member 170, and a latching support portion 174b formed on a bottom surface of a side flange portion 170e.

By doing so, components can be assembled with a simple structure using a latching pawl and a latched portion (for example, the latching hole).

### <<Supplementary Note 1>>

According to the present invention, there may be provided a conveyance seat including: a seat body including a seat back and a seat cushion, the seat capable of switching the seat body between a normal state and a movement state where the seat body is moved from the normal state; a lock device that is provided in the conveyance seat, and that locks a movement operation of the seat body in the normal state; an operation lever that is provided in the conveyance seat, and that operates to release a locked state of the lock device; a connecting member that connects the lock device and the operation lever, and that acts to switch the lock device from the locked state to an unlocked state in response to the operation of the operation lever; and a position holding member attached to the connecting member, and holding a position of the connecting member. The connecting member may extend between the lock device and the operation lever. The position holding member may extend in an extending direction of the connecting member, and may be attached to the connecting member to be aligned along the connecting member.

With the above-described configuration, it is possible to realize the conveyance seat in which the device (lock device) that switches the state of the seat body is made into a compact structure. Particularly, the assembly structure of the components of the device can be simplified.

In a detailed description, the position holding member that holds the position of the connecting member extends in the extending direction of the connecting member, and is attached to the connecting member to be aligned along the connecting member. For this reason, the connecting member and the position holding member can be more compactly disposed compared to the related art. In addition, the position holding member is easily assembled to the connecting member.

In this case, the movement state may be a storage state where the seat back is stored and moved toward a vehicle body floor side. The lock device may include a lock member that detachably engages with a striker provided on a vehicle body or the conveyance seat, and that moves between a lock position where the storage operation of the seat back is locked and an unlock position. The position holding member may have flexibility, and may bend in a direction orthogonal to an extending direction of the position holding member to hold the position of the connecting member.

With the above-described configuration, in the conveyance seat in which the seat body can be stored, the components can be compactly disposed.

In this case, the connecting member may include an attachment portion to which the position holding member is attached in the extending direction of the connecting member, and an engagement portion with which an engaged portion provided in the position holding member is engaged in a direction different from the extending direction.

With the above-described configuration, the position holding member is more easily assembled to the connecting member.

In this case, the connecting member may include the attachment portion to which the position holding member is attached in an up to down direction, and the engagement portion which is disposed at a position lower than the attachment portion, and with which the engaged portion is engaged in a seat front to rear direction. A lower end portion of the position holding member may be bent to a side opposite to a connecting member side.

With the above-described configuration, the engaged portion of the position holding member is easily engaged with the engagement portion of the connecting member.

In this case, the connecting member may be a connecting link, and may extend long in an up to down direction between the lock device and the operation lever. The position holding member may extend long in the up to down direction along the connecting member. A length of the position holding member in a seat front to rear direction may be shorter than a length of the connecting member in the seat front to rear direction.

With the above-described configuration, the position holding member can be compactly disposed.

In this case, the position holding member may be formed in a plate shape, and may be disposed along an outer surface of the connecting member.

With the above-described configuration, the position holding member can be formed to be relatively thin. For this reason, the position holding member can be compactly disposed.

In this case, the conveyance seat may further include a lever attachment member which is attached to the conveyance seat, and to which the operation lever is attached. The operation lever may be housed in the lever attachment member, and may be rotatably attached to the lever attachment member via a lever rotating shaft. An opening portion through which the connecting member passes and which is used for connecting the connecting member to the operation lever may be formed on an outer surface of the lever attachment member. The opening portion may be formed to become wider as the opening portion becomes farther from the operation lever.

With the above-described configuration, assembling the connecting member to the operation lever is facilitated by using the opening portion provided in the lever attachment member.

In this case, the position holding member may pass through the opening portion to be disposed inside the lever attachment member, together with the connecting member. An inner surface of the opening portion may have a first inner surface formed in a planar shape, and a second inner surface provided outside the first inner surface, and formed to expand in an inclined shape. The position holding member may include a flexible portion having flexibility. The flexible portion may come into contact with the first inner surface of the opening portion and bend to hold the position of the connecting member.

With the above-described configuration, the flexible portion of the position holding member comes into contact with the first inner surface of the lever attachment member, the first inner surface being formed in a planar shape, and bends. For this reason, the position holding member easily holds the position of the connecting member.

In this case, the connecting member may be a connecting link, and may extend long in an up to down direction between the lock device and the operation lever. The position holding member may extend long in the up to down direction along the connecting member, and may be attached only to the connecting member.

With the above-described configuration, the connecting member and the position holding member can be compactly disposed. In addition, the assembly structure of the connecting member and the position holding member can be simplified.

In this case, the connecting member and the position holding member may be integrally formed from the same resin material.

With the above-described configuration, the number of the components can be reduced.

### <<Supplementary Note 2>>

In addition, according to the present invention, there may be provided a conveyance seat including: a seat body including a seat back and a seat cushion, the seat capable of switching the seat body between a normal state and a movement state where the seat body is moved from the normal state; a lock device that is provided in the conveyance seat, and that locks a movement operation of the seat body in the normal state; an operation lever that is provided in the conveyance seat, and that operates to release a locked state of the lock device; a connecting member that connects the lock device and the operation lever, and that acts to switch the lock device from the locked state to an unlocked state in response to the operation of the operation lever; and a biasing member assembled to the connecting member, and biasing the connecting member to a lock device side or an operation lever side. The connecting member may include an assembly portion to which the biasing member is assembled, and a body portion of the connecting member and the assembly portion may be integrally formed.

With the above-described configuration, it is possible to realize the conveyance seat in which the device (lock device) that switches the state of the seat body is made into a simple structure. In addition, the assembly structure of the components of the device can be simplified.

In a detailed description, the connecting member includes the assembly portion to which the biasing member is assembled, and the body portion of the connecting member and the assembly portion are integrally formed. For this reason, it is possible to eliminate the need for separate members as much as possible when the components (the connecting member and the biasing member) are assembled. In addition, the biasing member is easily assembled to the connecting member.

In this case, the movement state may be a storage state where the seat back is stored and moved toward a vehicle body floor side. The lock device may include a lock member that detachably engages with a striker provided on a vehicle body or the conveyance seat, and that moves between a lock position where the storage operation of the seat back is locked and an unlock position. The assembly portion may be an assembly projection protruding from a side surface of the body portion of the connecting member toward a biasing member, and may be assembled to one end portion of the biasing member.

With the above-described configuration, in the conveyance seat in which the seat body can be stored, the components can be compactly disposed.

In this case, the connecting member may be a connecting link, and may extend long in an up to down direction between the lock device and the operation lever. The biasing member may be a biasing spring, and may be disposed at a position lower than the connecting member. The assembly portion may be disposed at a lower portion of the connecting member, and may be assembled to an upper end portion of the biasing member.

As described above, since the connecting member and the biasing member are disposed side by side in the up to down direction, the connecting member and the biasing member can be compactly disposed in a seat front to rear direction.

In this case, the assembly portion may be formed to protrude from a side surface of the body portion of the connecting member toward the biasing member, and to become wider as the assembly portion extends toward a protruding distal end portion of the assembly portion. A portion of the assembly portion, to which the biasing member is assembled, may be narrower than the protruding distal end portion of the assembly portion.

With the above-described configuration, the biasing member can be firmly assembled to the connecting member. In addition, the coming off of the biasing member from the connecting member can be suppressed.

In this case, the connecting member may extend long in an up to down direction between the lock device and the operation lever. The connecting member may include a reinforcing portion formed on a side surface of the connecting member, and extending along an extending direction of the connecting member. The reinforcing portion may be a reinforcing recess having a recessed shape or a reinforcing protrusion having a protruding shape, and the assembly portion may be formed on the side surface of the connecting member, and may be disposed at a position different from a position of the reinforcing portion in the up to down direction.

With the above-described configuration, the rigidity of the connecting member can be increased with a simple configuration.

In addition, as described above, since the assembly portion and the reinforcing portion are disposed at different positions, when the reinforcing portion has a recessed shape, the thickness of the assembly portion can be ensured. Alternatively, when the reinforcing portion has a protruding shape, the connecting member (reinforcing portion) can be made smaller.

In this case, a through-hole penetrating through the connecting member may be formed in the reinforcing portion. The assembly portion and the through-hole may be disposed side by side on the side surface of the connecting member.

As described above, since the connecting member includes the through-hole, the weight of the connecting member can be reduced. In addition, with the above-described configuration, the connecting member can be made to have a simple configuration.

In this case, the connecting member may include a lever engagement portion having a protrusion shape and engaged with an engagement hole provided in the operation lever. A width of the engagement hole in an extending direction of the connecting member may be larger than a width of the engagement hole in a direction intersecting the extending direction of the connecting member.

With the above-described configuration, the connecting member can be easily attached to the operation lever. Namely, the connecting member can be attached to the operation lever while adjusting the position of the connecting member in the extending direction.

In this case, the conveyance seat may further include a position holding member attached to the connecting member, and holding a position of the connecting member. The connecting member may extend long in an up to down direction between the lock device and the operation lever. The position holding member may be disposed between a portion of the connecting member which is assembled to the lock device and a portion of the connecting member which is engaged with the operation lever.

With the above-described configuration, rattling of the connecting member can be suppressed. In addition, the position holding member can be compactly disposed with respect to the connecting member.

In this case, the connecting member may include an attachment portion to which the position holding member is attached. The position holding member may be stored in and attached to the attachment portion.

With the above-described configuration, the position holding member is easily assembled to the connecting member. In addition, the position holding member can be more stably assembled.

In this case, the position holding member may be formed in a plate shape, may extend in an extending direction of the connecting member, and may be disposed along an outer surface of the connecting member.

With the above-described configuration, the position holding member can be made thin, and an increase in the size of the switching device can be suppressed. In addition, the position holding member can be compactly disposed.

### <<Supplementary Note 3>>

In addition, according to the present invention, there may be provided a conveyance seat including: a seat body including a seat back and a seat cushion, the seat capable of switching the seat body between a normal state and a movement state where the seat body is moved from the normal state; a lock device that locks a movement operation of the seat body in the normal state; a lock cover covering the lock device; a lever attachment member attached to the conveyance seat; and an operation lever that is attached to the lever attachment member, and that operates to release a locked state of the lock device. The lever attachment member may include a first fitting portion fitted to a first fitted portion provided in the lock cover, and a second fitting portion fitted to a second fitted portion provided in the lock cover. The first fitting portion and the second fitting portion may extend in respective directions orthogonal to a fitting direction of the lock cover, and may extend in directions intersecting each other.

With the above-described configuration, it is possible to realize the conveyance seat in which components of the device that switches the state of the seat body can be firmly assembled in a well-balanced manner. In addition, the assembly structure of the components of the device can be simplified.

In a detailed description, the lever attachment member is fitted to the lock cover by a plurality of the fitting portions, and the first fitting portion and the second fitting portion extend in the respective directions orthogonal to the fitting direction of the lock cover, and extend in the directions intersecting each other. In such a manner, since the first fitting portion and the second fitting portion extend in different directions, for example, even when loads are applied in various directions, the fitting structure can be made more firm compared to the related art.

In this case, the movement state may be a storage state where the seat back is stored and moved toward a vehicle body floor side. The lock device may include a lock member that detachably engages with a striker provided on a vehicle body or the conveyance seat, and that moves between a lock position where the storage operation of the seat back is locked and an unlock position. The first fitting portion and the second fitting portion may extend in directions orthogonal to each other.

With the above-described configuration, in the conveyance seat in which the seat body can be stored, the components can be firmly assembled in a more balanced manner.

In this case, the lock cover may be assembled to the lever attachment member in a seat width direction. The first fitting portion and the second fitting portion may be disposed at different positions in an up to down direction, and may be disposed at different positions in a seat front to rear direction.

In addition, the conveyance seat may further include a connecting member that connects the lock device and the operation lever, and that acts to switch the lock device from the locked state to an unlocked state in response to the operation of the operation lever. The lever attachment member may further include a third fitting portion fitted to a third fitted portion provided in the lock cover. The third fitting portion may be disposed opposite to a side of the first fitting portion and the second fitting portion with respect to the connecting member.

With the above-described configuration, the lever attachment member and the lock cover can be firmly assembled in a more balanced manner.

In this case, the first fitting portion and the third fitting portion may extend long in the same direction.

In addition, the lock cover may be assembled to the lever attachment member in a seat width direction. The second fitting portion may be disposed between the first fitting portion and the third fitting portion in a seat front to rear direction.

With the above-described configuration, the lever attachment member and the lock cover can be firmly assembled in a more balanced manner.

In this case, the lock cover may include a first lock cover covering the lock device, and a second lock cover attached to a side surface of the first lock cover. The first fitted portion and the third fitted portion may be formed in the first lock cover, and the second fitted portion is formed in the second lock cover.

As described above, since the lever attachment member, the first lock cover, and the second lock cover are fitted to each other by the plurality of fitting portions, these components can be stably and firmly assembled.

In this case, the lever attachment member and the lock cover may be assembled by fitting the first fitting portion, the second fitting portion, and the third fitting portion in the same direction.

With the above-described configuration, the work of assembling the lock cover to the lever attachment member is facilitated. In addition, the automation of the assembly work is also facilitated.

In this case, the lock cover may include a cover flange formed to protrude from a side surface of an outer edge portion of the lock cover toward a lock device side, and disposed to surround the lock device. The first fitting portion, the second fitting portion, and the third fitting portion may be disposed on a side surface of the lock cover outside the cover flange.

With the above-described configuration, an outer portion (outer edge portion) of the lock cover can be fitted to the lever attachment member, and the fitting strength of the lock cover can be increased.

In this case, the lock cover may include a first reinforcing portion formed to protrude from the side surface of the outer edge portion of the lock cover toward the lock device side, and connecting the cover flange and the first fitting portion, and a second reinforcing portion formed to protrude from the side surface of the outer edge portion of the lock cover toward the lock device side, and connecting the cover flange and the third fitting portion.

With the above-described configuration, the fitting strength of the first fitting portion and the third fitting portion can be increased.

### <<Supplementary Note 4>>

In addition, according to the present invention, there may be provided a conveyance seat including: a seat body including a seat back and a seat cushion, the seat capable of switching the seat body between a normal state and a movement state where the seat body is moved from the normal state; a lock device that is provided in the conveyance seat, and that locks a movement operation of the seat body in the normal state; a lever attachment member attached to the conveyance seat; an operation lever that is attached to the lever attachment member, and that operates to release a locked state of the lock device; a cover member disposed between the lever attachment member and the operation lever, and covering the operation lever; and a plate member having a plate shape, provided between the lever attachment member and the cover member, and disposed to surround the operation lever. The operation lever may be provided to be exposed from a skin opening hole formed on an outer surface of a skin material serving as a covering material of the seat body. An outer peripheral portion of the skin opening hole of the skin material may be sandwiched between the cover member and the plate member. The lever attachment member may include a protruding portion protruding from a body portion of the lever attachment member toward a plate member side, and supporting the plate member by coming into contact with an inner surface or an outer surface of the plate member.

With the above-described configuration, it is possible to realize the conveyance seat in which the assembly structure of the components of the device that switches the state of the seat body is simplified.

In a detailed description, the lever attachment member includes the plate support portion protruding from the body portion of the lever attachment member toward the plate member side, and supporting the plate member by coming into contact with the side surface of the plate member. For this reason, when the plate member is assembled to the lever attachment member, there is no need to perform additional processing on the plate member side. Namely, the assembly structure can be more simplified than in the related art.

In this case, the movement state may be a storage state where the seat back is stored and moved toward a vehicle body floor side. The lock device may include a lock member that detachably engages with a striker provided on a vehicle body or the conveyance seat, and that moves between a lock position where the storage operation of the seat back is locked and an unlock position. The plate support portion may extend along the side surface of the plate member.

With the above-described configuration, in the conveyance seat in which the seat body can be stored, the plate member can be firmly assembled to the lever attachment member.

In this case, a plurality of the plate support portions may be formed at intervals along the side surface of the plate member. The plate support portion located at an uppermost position among the plurality of plate support portions may be disposed at a position higher than the body portion of the lever attachment member.

With the above-described configuration, the plate member can be more firmly assembled to the lever attachment member.

In this case, the lever attachment member may include engagement portions that engage with engaged portions provided on a side surface of the cover member. A plurality of the plate support portions may be formed at intervals along the side surface of the plate member. The engagement portions may be disposed between the plurality of plate support portions.

As described above, since the engagement portions are disposed between the plurality of plate support portions, the cover member can be stably engaged with the lever attachment member.

In this case, the engagement portions may be engagement protrusions that engage with engagement holes provided on a side surface of the cover member. The lever attachment member may include positioning portions that are formed around the engagement protrusions, and that position the engagement holes at positions where the engagement holes are engaged with the engagement protrusions.

With the above-described configuration, the cover member can be easily engaged with the lever attachment member.

In this case, the lever attachment member may include a cover support portion protruding from the body portion of the lever attachment member toward a cover member side, and supporting the cover member by coming into contact with a surface of the cover member. The cover support portion may be provided adjacent to the plate support portion.

With the above-described configuration, the lever attachment member (cover support portion) can come into contact with the cover member, and the cover member can be stably engaged with the lever attachment member.

In addition, with the above-described configuration, since the cover support portion protrudes toward the cover member side, a space between the lever attachment member and the cover member can be ensured. The plate member or the skin material can be fitted between the lever attachment member and the cover member using the space.

In this case, the lever attachment member may include a projecting portion projecting from the body portion of the lever attachment member toward one side in a seat front to rear direction, and supporting the skin material by coming into contact with the outer peripheral portion of the skin opening hole of the skin material.

With the above-described configuration, one end portion of the skin material in the front to rear direction is supported by the projecting portion of the lever attachment member, so that the skin material can be tensioned. By doing so, the occurrence of wrinkles in the skin material can be suppressed.

In this case, the projecting portion may include an upper wall portion and a bottom wall portion disposed at different positions in an up to down direction and projecting from a rear surface of the body portion of the lever attachment member toward a seat rear side, and a support wall portion connecting a rear end portion of the upper wall portion and a rear end portion of the bottom wall portion and supporting the skin material, and may be formed in a hollow shape in a seat side view.

As described above, since the projecting portion of the lever attachment member is formed in a hollow shape, the weight of the lever attachment member can be reduced.

In this case, the plate member may be a frame-shaped plate body, and a plurality of the plate support portions may support the plate member by coming into contact with an inner surface of the plate member, may extend along the inner surface of the plate member, and may be disposed at intervals.

With the above-described configuration, the plate member having a frame shape can be assembled to the lever attachment member with a simple structure. In addition, the plate member can be firmly assembled.

In this case, the lever attachment member may include a latching portion latched to a latched portion provided on a side surface of the cover member. One of the latching portion and the latched portion may be a latching pawl, and may be latched to the other of the latching portion and the latched portion.

With the above-described configuration, the components can be assembled with a simple structure using the latching pawl and the latched portion (for example, a latching hole).

### <Second embodiment>

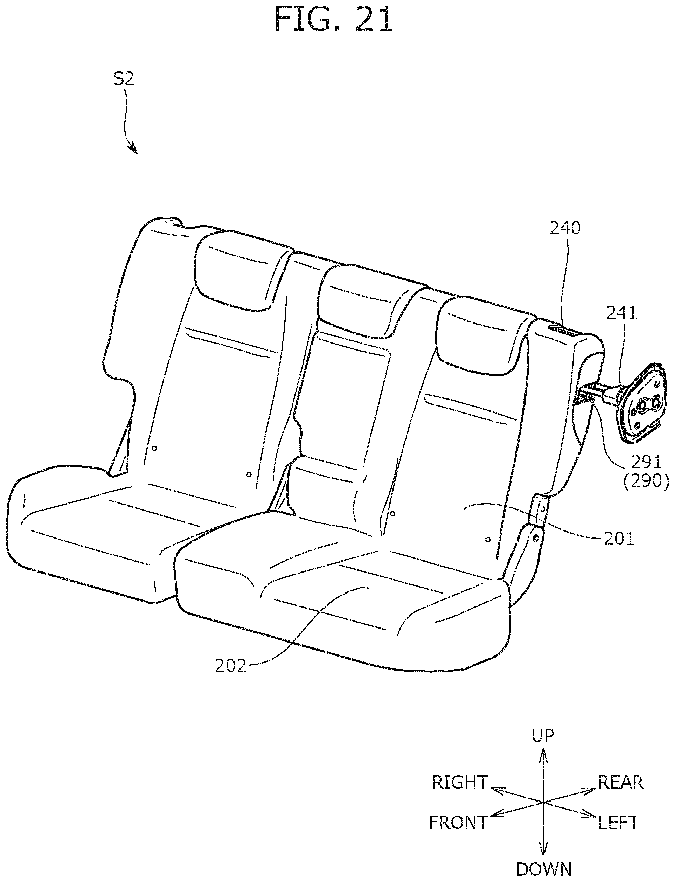

Next, a conveyance seat S2 of a second embodiment will be described based on FIGS. 21 to 37.

Incidentally, the description of contents that overlap with those of the conveyance seat S1 described above will be omitted.

The conveyance seat S2 differs from the conveyance seat S1 mainly in that a buffer member is attached to a lock device (lock cover).

The conveyance seat S2 includes a switching device that switches the state of a seat body by being detachably connected to a striker of a vehicle body, and a buffer member that comes into contact with the striker, and realizes a seat in which the buffer member can be suitably attached.

As shown in FIG. 21, the conveyance seat S2 includes the seat body including a seat back 201 and a seat cushion 202, and a switching device 240 that is attached to an outer surface of the seat back 201, and that switches the seat body from a "normal state" to a "storage state".

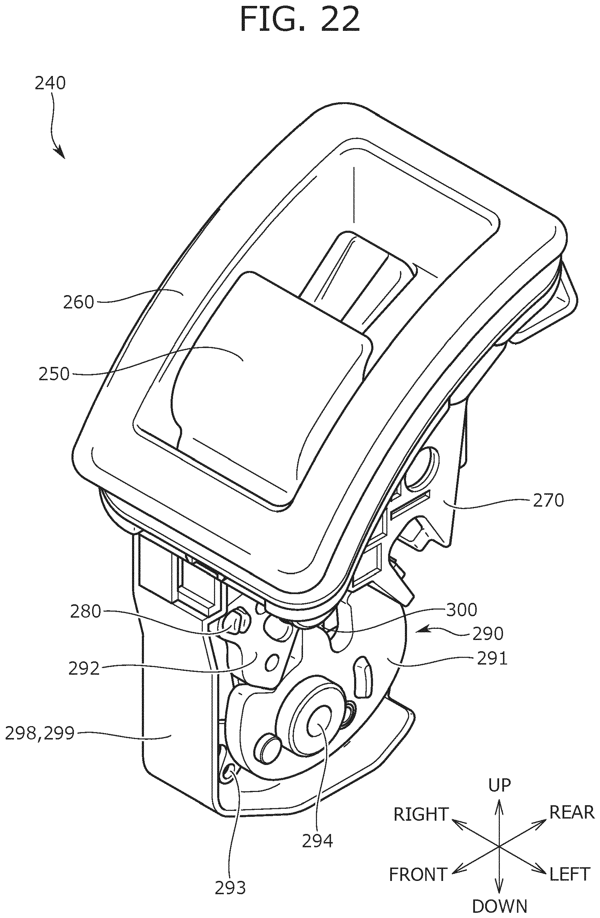

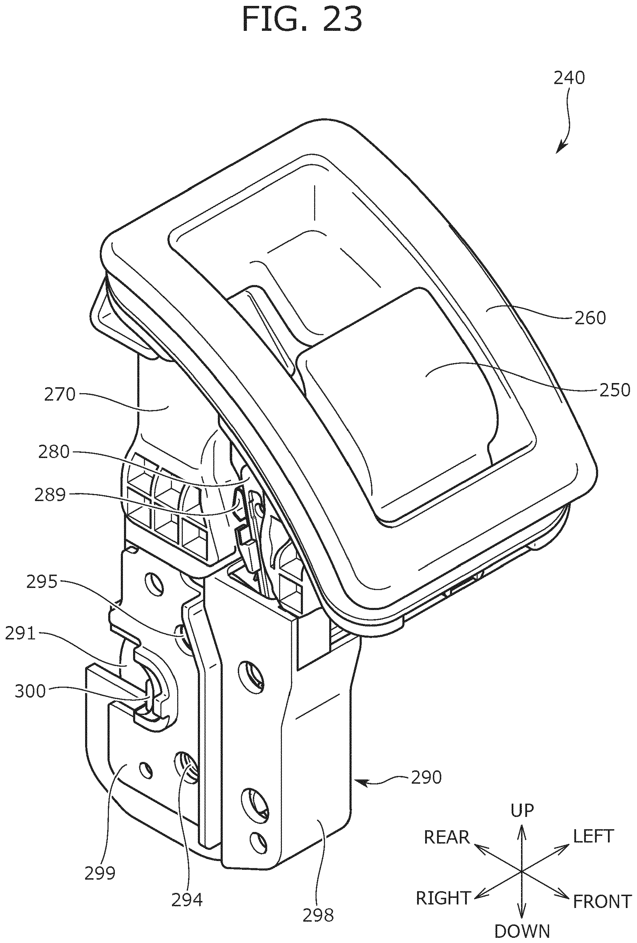

As shown in FIGS. 22 and 23, the switching device 240 includes a lock device 290 that locks the movement operation of the seat body; an operation lever 250 that releases the locked state of the lock device 290; a connecting link 280 connecting the lock device 290 and the operation lever 250; and a position holding member 289 that holds the position of the connecting link 280.

The operation lever 250 is housed in a cover member 260 and a lever attachment member 270.

The lock device 290 includes a lock member 291 engaged with a striker 241, a transmission member 292, a second transmission member 293, a lock rotating shaft 294, a second lock rotating shaft 295, a biasing spring 296, and a connecting pin 297.

The lock device 290 is covered with a first lock cover 298 and a second lock cover 299. In a detailed description, the first lock cover 298 and the second lock cover 299 are covers that cover the lock member 291, the transmission member 292, the second transmission member 293, and the biasing spring 296 from the sides.

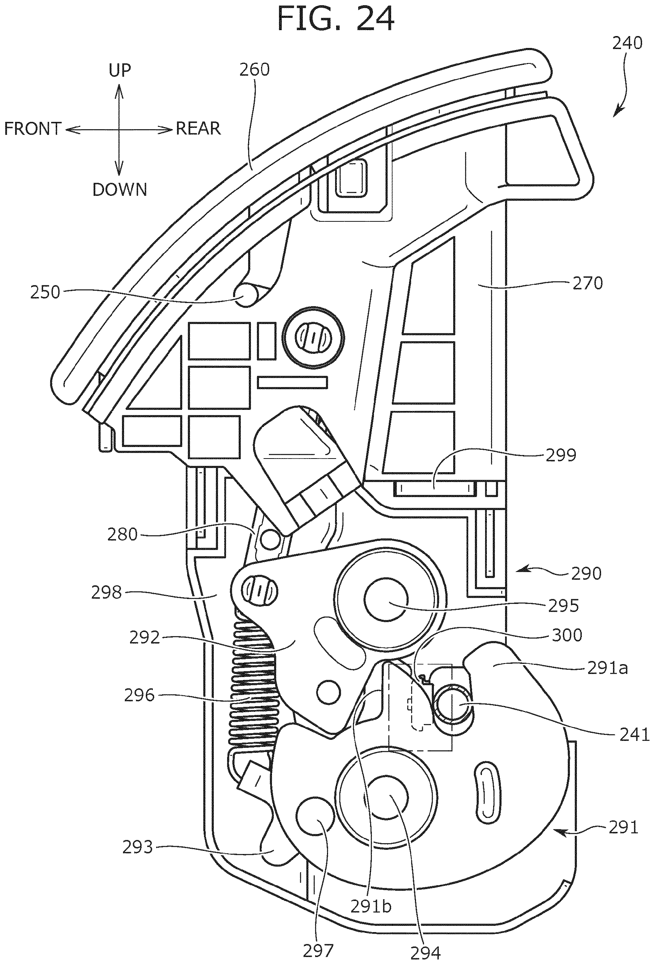

As shown in FIGS. 24 to 28, an attachment groove 298k for detachably attaching a buffer member 300 is formed at a portion of the first lock cover 298, with which the striker 241 comes into contact.

In a detailed description, the attachment groove 298k to which the buffer member 300 is attached, and attachment projections 2981 and 298m and an attachment hole 298n that hold the buffer member 300 are formed in the first lock cover 298.

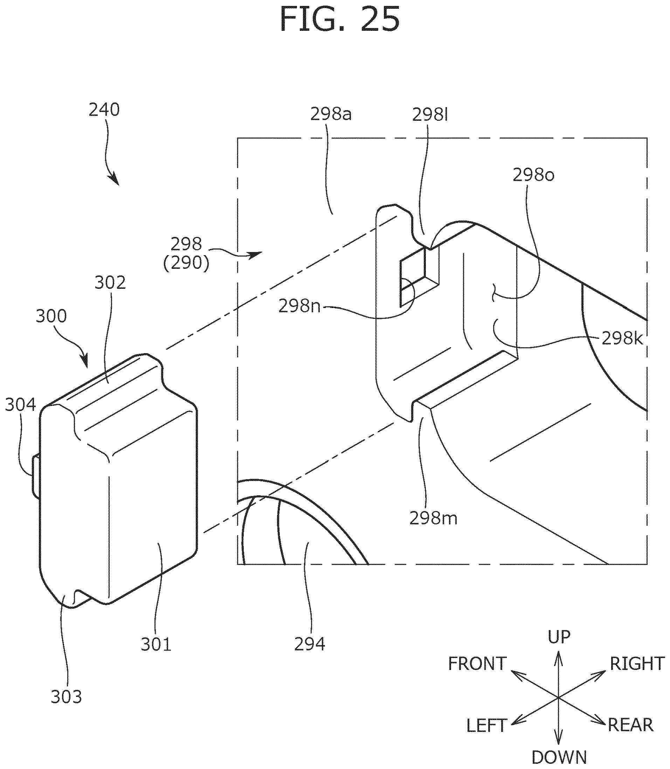

As shown in FIGS. 24 and 25, the attachment groove 298k is formed at a position facing the lock member 291 (contact portion 291b) in the seat width direction.

As shown in FIG. 25, the attachment projections 2981 and 298m are formed on an upper surface and a bottom surface of inner surfaces of the attachment groove 298k. The attachment hole 298n is formed on a front surface of the inner surfaces of the attachment groove 298k. An opening 298o is formed on a rear surface of the inner surfaces of the attachment groove 298k.

As shown in FIGS. 25 to 28, the buffer member 300 is an elastic member (flexible member), and is attached to the attachment groove 298k of the first lock cover 298 from the outside in the seat width direction.

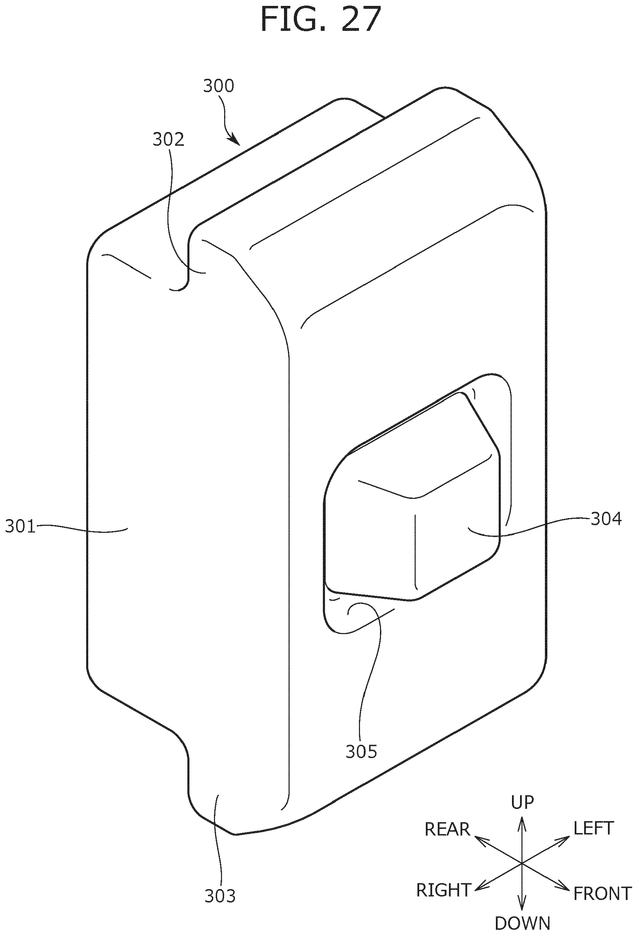

As shown in FIG. 27, the buffer member 300 includes a body portion 301 having a three-dimensional shape that is long in the up to down direction; protruding portions 302 and 303 protruding from both end portions of the body portion 301 in a longitudinal direction toward opposite sides; and a projection portion 304 protruding in a direction orthogonal to each of the longitudinal direction (length direction) and a lateral direction (width direction) of the body portion 301 (height direction).

Incidentally, in the buffer member 300, a relief groove 305 is formed at a peripheral portion of the projection portion 304 to surround the entire circumference of the projection portion 304.

When the buffer member 300 is attached to the attachment groove 298k, the buffer member 300 is stored in the attachment groove 298k without projecting from the first lock cover 298.

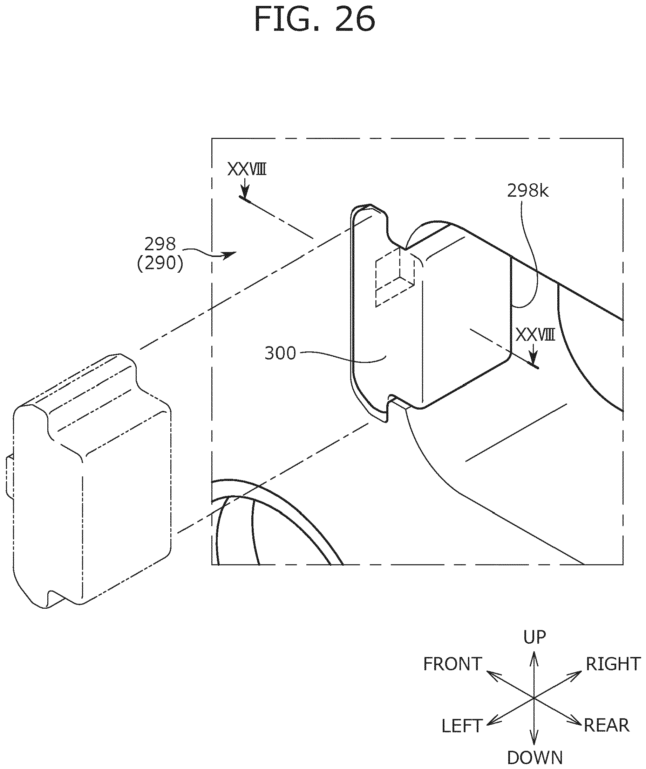

In this case, as shown in FIG. 26, the body portion 301 is sandwiched and disposed between the attachment projections 298l and 298m in the up to down direction.

The protruding portion 302 (303) is sandwiched and disposed between the first lock cover 298 (body portion 298a) and the attachment projection 298l (298m) in the seat front to rear direction.

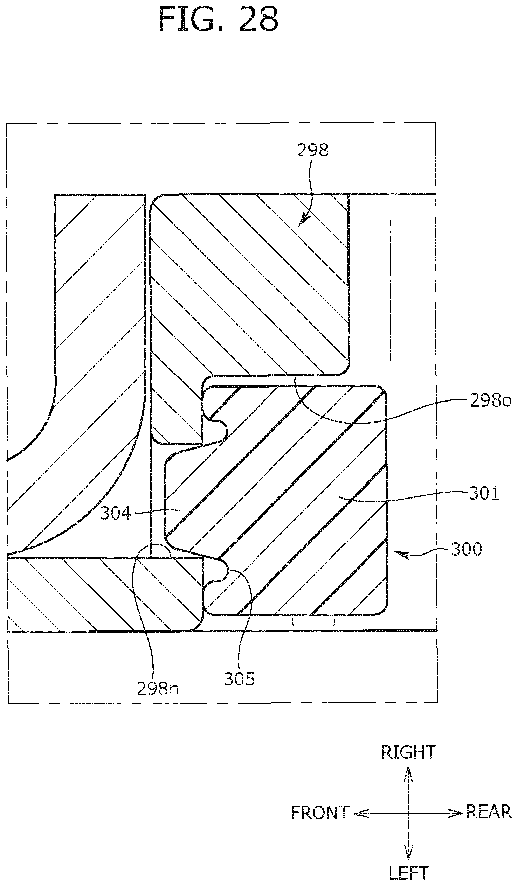

As shown in FIGS. 26 and 28, the projection portion 304 is attached to fit into the attachment hole 298n. In other words, the projection portion 304 is fitted into the attachment hole 298n.

As shown in FIGS. 26 and 28, the buffer member 300 (body portion 301) is exposed from the opening 298o of the first lock cover 298, and protrudes rearward from the opening 298o.

Namely, the buffer member 300 (body portion 301) is disposed at a position facing the striker 241 in the seat front to rear direction, and can come into contact with the striker 241.

As described above, the buffer member 300 can be stably attached by attaching the buffer member 300 to the first lock cover 298 (attachment groove 298k) .

In addition, since no separate attachment member is required, the buffer member 300 can be easily attached, and the buffer member 300 can be easily removed.

In addition, the present embodiment can deal with both patterns such as a structure in which the buffer member 300 is attached and a structure in which the buffer member 300 is not attached. Namely, compatibility can be achieved.

In addition, the buffer member 300 can be held suitably by reducing an exposed portion of the buffer member 300 as much as possible.

In addition, as described above, the relief groove 305 is formed at the peripheral portion of the projection portion 304 in the buffer member 300.

By doing so, a situation where the buffer member 300 unintentionally comes into contact with an edge portion of the attachment hole 298n of the first lock cover 298 and a part of the buffer member 300 is scraped can be suppressed. Namely, the coming off of the buffer member 300 can be suppressed.

### <<Modification Example 1 of buffer member and lock cover>>

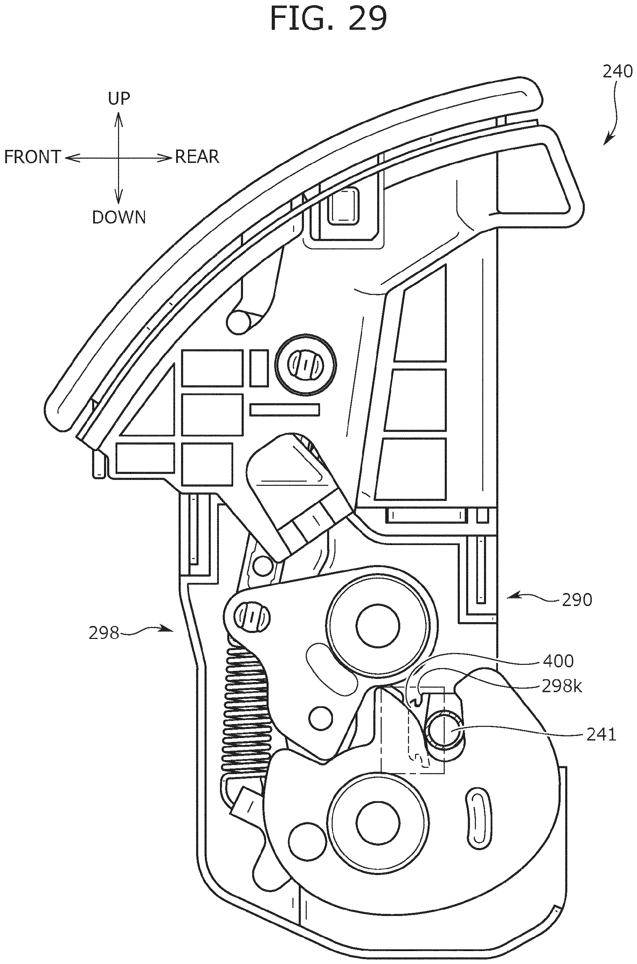

Next, Modification Example 1 of the buffer member and the lock cover will be described based on FIGS. 29 to 31.

Incidentally, the description of contents that overlap with those of the conveyance seats S1 and S2 described above will be omitted.

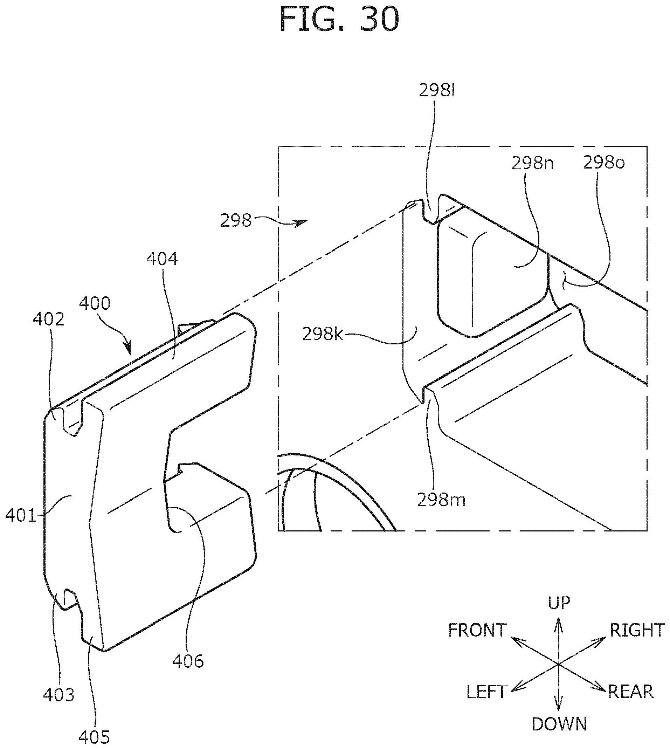

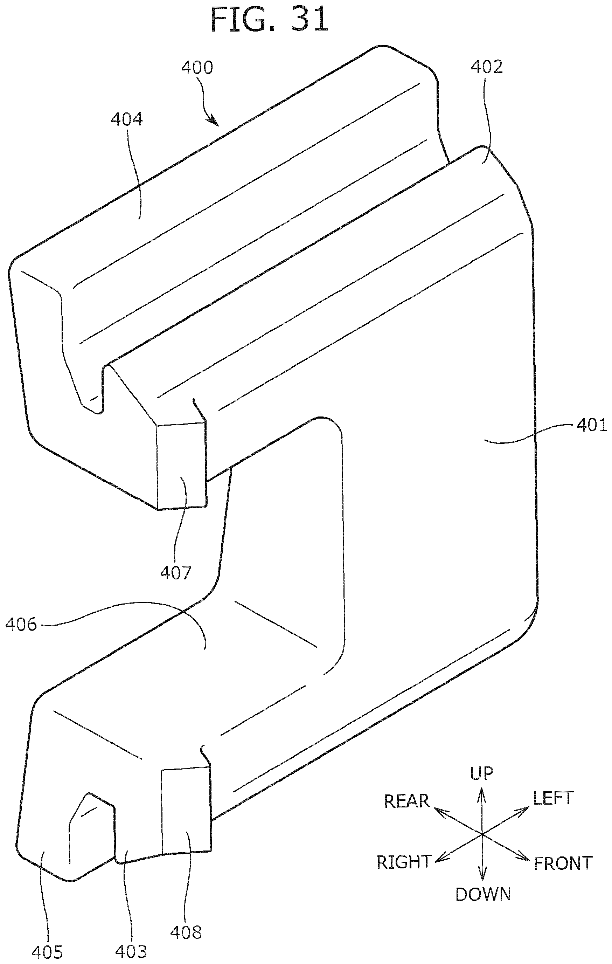

As shown in FIGS. 30 and 31, the attachment groove 298k to which a buffer member 400 is detachably attached is formed at a portion of the first lock cover 298, with which the striker 241 comes into contact.

In a detailed description, the attachment groove 298k, and the attachment projections 298l and 298m and an attachment protrusion 298n that hold the buffer member 300 are formed in the first lock cover 298.

As shown in FIGS. 30 and 31, the buffer member 400 includes a body portion 401 having a three-dimensional shape that is long in the up to down direction; protruding portions 402 and 403; second protruding portions 404 and 405; an attachment hole 406 (cutout hole); and latching projections 407 and 408.

The protruding portions 402 and 403 protrude from both end portions of the body portion 401 in a longitudinal direction toward opposite sides. In addition, the second protruding portions 404 and 405 protrude from both the end portions of the body portion 401 in the longitudinal direction toward the opposite sides.

The protruding portion 402 and the second protruding portion 404 are formed at different positions in a height direction of the body portion 401.

The attachment hole 406 is formed on an outer surface of the body portion 401 at a position different from those of the protruding portion 402 and the second protruding portion 404.

The latching projections 407 and 408 are formed at one end portions of the protruding portions 402 and 403 in a length direction, respectively.

When the buffer member 400 is attached to the attachment groove 298k, the buffer member 400 is stored in the attachment groove 298k without projecting from the first lock cover 298.

In this case, the body portion 401 is sandwiched and disposed between the attachment projections 298l and 298m in the up to down direction.

The protruding portion 402 (403) and the second protruding portion 404 (405) are disposed to sandwich the attachment projection 298l (298m) therebetween in the seat front to rear direction.

The attachment hole 406 is fitted to the attachment protrusion 298n.

The latching projections 407 and 408 are latched to an edge portion of the attachment groove 298k.

In the case of Modification Example 1 as well, the buffer member 400 can be stably attached to the lock cover 298 (attachment groove 298k).

### <<Modification Example 2 of buffer member and lock cover>>

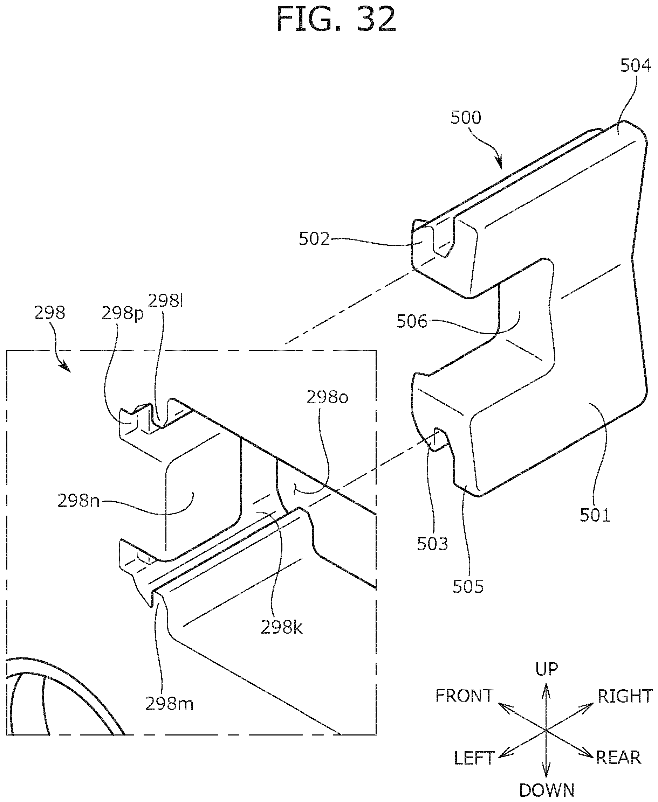

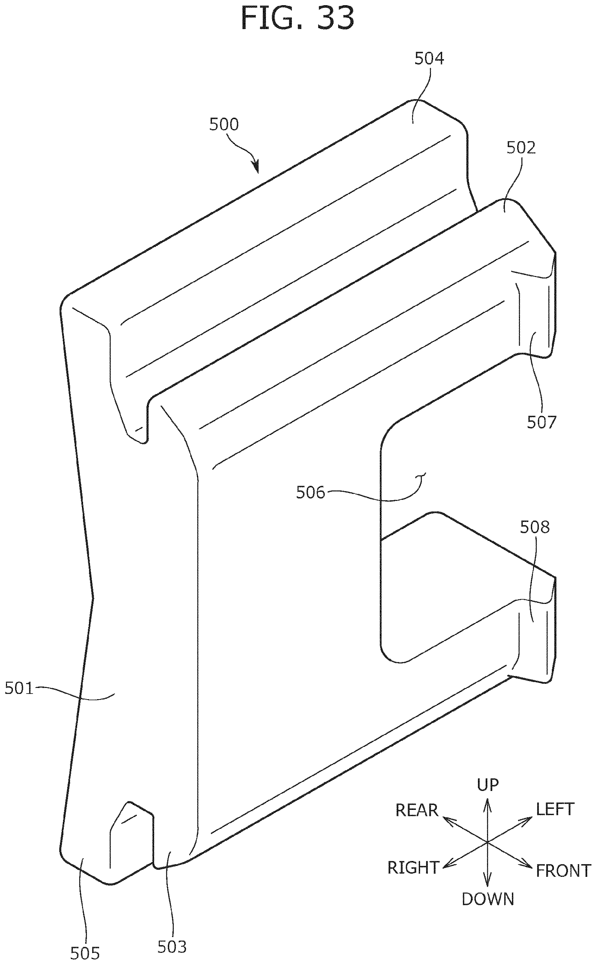

Next, Modification Example 2 of the buffer member and the lock cover will be described based on FIGS. 32 and 33.

The attachment groove 298k to which a buffer member 500 is attached is formed at a portion of the first lock cover 298, with which the striker 241 comes into contact.

In a detailed description, the attachment groove 298k, and the attachment projections 298l and 298m and an attachment protrusion 298n that hold the buffer member 300 are formed in the first lock cover 298.

The buffer member 500 includes a body portion 501 having a three-dimensional shape that is long in the up to down direction; protruding portions 502 and 503; second protruding portions 504 and 505; an attachment hole 506 (cutout hole); and latching projections 507 and 508.

When the buffer member 500 is attached to the attachment groove 298k, the attachment hole 506 is fitted to the attachment protrusion 298n.

The latching projections 507 and 508 are latched to an edge portion (latching groove 298p) of the attachment groove 298k.

In the case of Modification Example 2 as well, the buffer member 500 can be stably attached to the lock cover 298 (attachment groove 298k).

### <<Modification Example 3 of buffer member and lock cover>>

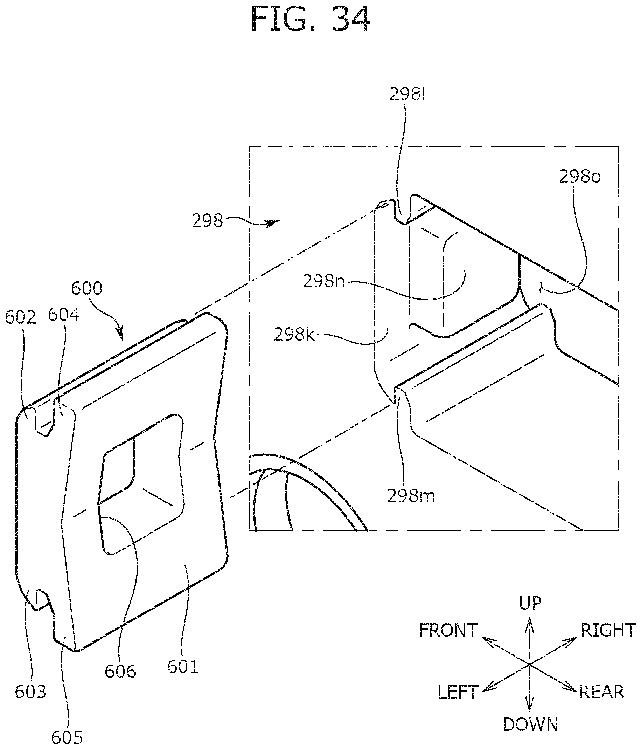

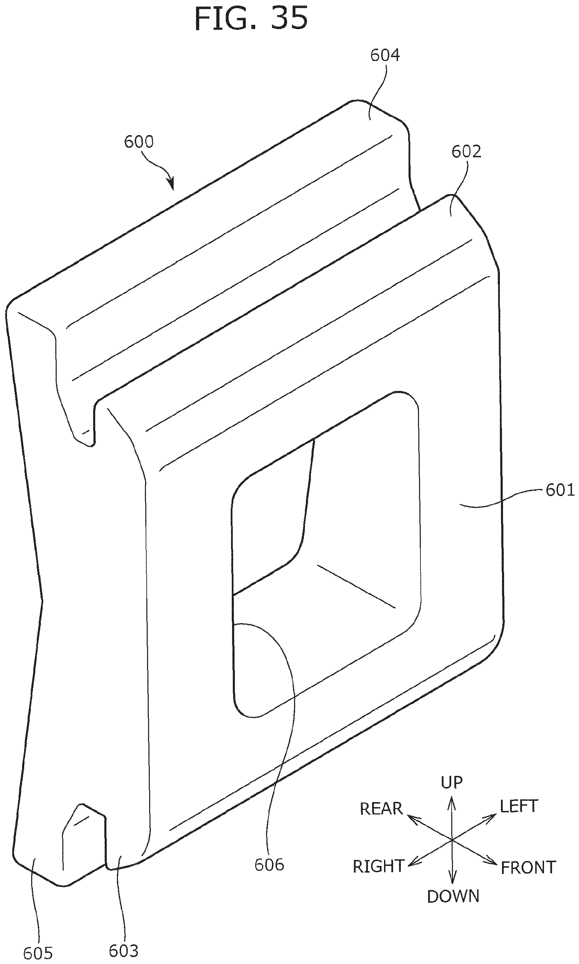

Next, Modification Example 3 of the buffer member and the lock cover will be described based on FIGS. 34 and 35.

The attachment groove 298k to which a buffer member 600 is attached is formed at a portion of the first lock cover 298, with which the striker 241 comes into contact.

In a detailed description, the attachment groove 298k, and the attachment projections 298l and 298m and an attachment protrusion 298n that hold the buffer member 300 are formed in the first lock cover 298.

The buffer member 600 includes a body portion 601 having a three-dimensional shape that is long in the up to down direction; protruding portions 602 and 603; second protruding portions 604 and 605; and an attachment hole 606 (through-hole).

When the buffer member 600 is attached to the attachment groove 298k, the attachment hole 606 is fitted to the attachment protrusion 298n.

The latching projections 607 and 608 are latched to the edge portion (latching groove 298p) of the attachment groove 298k.

In the case of Modification Example 3 as well, the buffer member 600 can be stably attached to the lock cover 298 (attachment groove 298k).

### <<Modification Example 4 of buffer member and lock cover>>

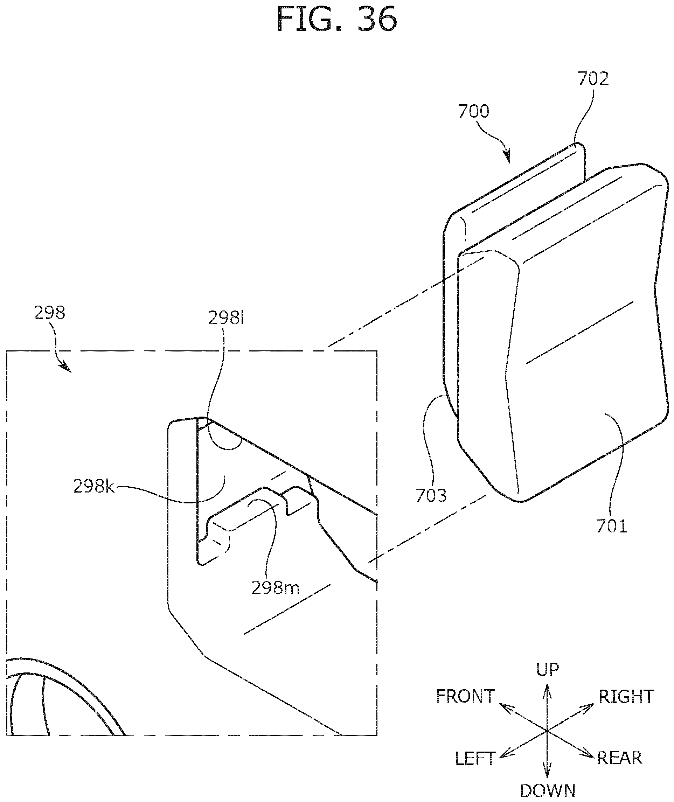

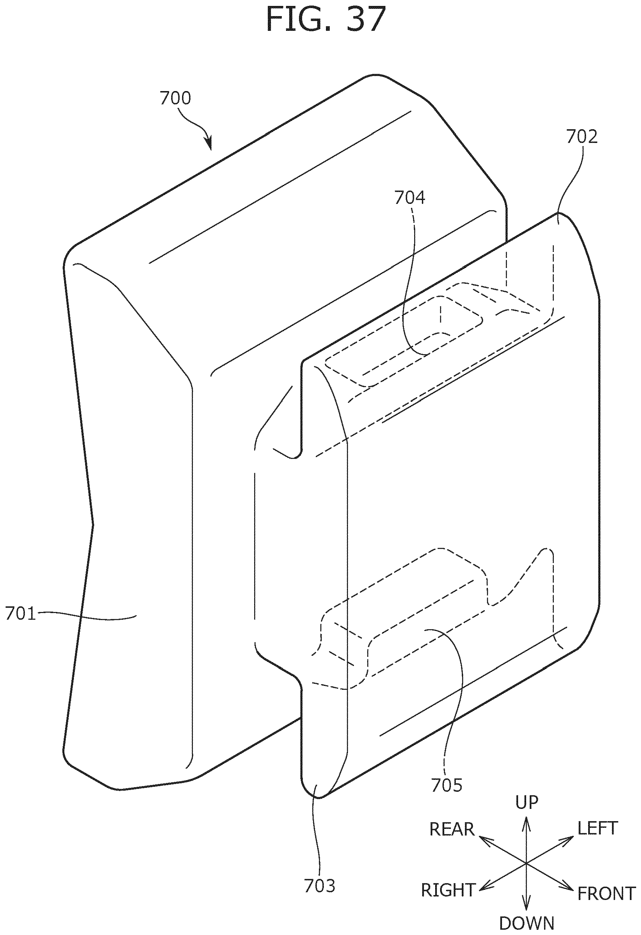

Next, Modification Example 4 of the buffer member and the lock cover will be described based on FIGS. 36 and 37.

The attachment groove 298k to which a buffer member 700 is attached is formed at a portion of the first lock cover 298, with which the striker 241 comes into contact.

In a detailed description, the attachment groove 298k, and the attachment projections 298l and 298m that hold the buffer member 300 are formed in the first lock cover 298.

The buffer member 700 includes a body portion 701 having a three-dimensional shape that is long in the up to down direction; protruding portions 702 and 703; and attachment recesses 704 and 705.

When the buffer member 700 is attached to the attachment groove 298k, the attachment recesses 704 and 705 are fitted to the attachment projections 298l and 298m, respectively.

In the case of Modification Example 4 as well, the buffer member 700 can be stably attached to the lock cover 298 (attachment groove 298k) .

In the above-described embodiments, the vehicle seats used in automobiles have been described as specific examples; however, the present invention is not particularly limited, and can be used for various seats such as office chairs for work, wheelchairs, and child chairs for shopping carts in addition to two-wheeled seats for two-wheeled vehicles, vehicle seats for trains and buses, and conveyance seats for airplanes and ships.

In the present embodiments, the conveyance seats according to the present invention have been mainly described.

However, the above-described embodiments are merely examples provided to facilitate understanding of the present invention, and do not limit the present invention. The present invention can be modified and improved without departing from the concept of the present invention, and it goes without saying that the present invention includes its equivalents.

### REFERENCE SIGNS LIST

### <First embodiment>

- S1:: conveyance seat
Sa: seat frame
- 1:: seat back
1a, 2a: pad material
1b, 2b: skin material
- 2:: seat cushion
- 3:: headrest
- 10:: back frame
- 11:: main frame
- 12:: panel frame
- 13:: connecting frame
- 14:: elastic support member
- 15:: vehicle body connecting bracket
- 16:: seat rotating shaft
- 17:: reclining device
- 20:: cushion frame
- 21:: side frame
- 22:: front connecting frame
- 23:: rear connecting frame
- 24:: pan frame
- 25:: cushion rotating device
- 26:: cushion rotating shaft
- 27:: leg rotating device
- 28:: leg rotating shaft
- 30:: support leg
- 31:: leg body portion
- 32:: leg connecting portion
- 35:: support base
- 36:: connecting wall portion
- 37:: outer wall portion
- 40:: switching device
- 41:: striker
- 50:: operation lever
50a: upper wall portion
50b: front wall portion
50c: side wall portion
50d: second side wall portion
50e: bottom wall portion
50f: reinforcing wall portion
- 51:: lever rotating shaft
- 52:: lever operation portion
- 53:: lever restriction portion
- 54:: engagement portion (link engagement portion, engagement hole)
- 60:: cover member
60a: side wall portion
60b: front wall portion
60c: rear wall portion
60d: bottom wall portion
60e: side flange portion
60f: front flange portion
60g: rear flange portion
- 61:: cover opening portion
- 62:: cover engagement hole (engaged portion, engagement hole portion)
- 63:: lever contact portion
- 64:: assembly projection
- 65:: plate member
- 70:: lever attachment member
70a: side wall portion
70b: front wall portion
70c: rear wall portion
70d: bottom wall portion
70e: side flange portion
70f: front flange portion
70g: rear flange portion
- 71:: shaft support portion
- 72:: engagement pawl (engagement portion, engagement protrusion)
72a: positioning portion (positioning recess)
- 73:: opening portion (opening hole)
73a: first inner surface
73b: second inner surface
- 74:: cover assembly portion (assembly projection)
- 75:: plate support portion (support projection)
- 76:: first fitting portion (fitting hole)
- 77:: second fitting portion (fitting hole)
- 78:: third fitting portion (fitting hole)
- 79:: projecting portion
79a: upper wall portion
79b: bottom wall portion
79c: support wall portion
- 80:: connecting link (connecting member)
- 81:: body portion
- 82:: lever engagement portion (lever engagement protrusion)
82a, 83a: engagement body portion
82b, 83b: engagement pawl
82c, 83c: slit hole
- 83:: lock connecting portion (connecting protrusion)
- 84:: spring assembly portion (assembly portion)
84a: protruding distal end portion
- 85:: attachment portion
85a: attachment body portion
85b: hook portion
- 86:: engagement protrusion (engagement portion, engagement portion of position holding member)
- 87:: reinforcing portion
- 88:: through-hole
- 89:: position holding member
89a: body portion
89b: protruding portion
89c: engagement hole
89d: flexible portion
89e: bent portion
- 90:: lock device
- 91:: lock member
91a: striker engagement portion
91b: contact portion
- 92:: transmission member
92a: connecting hole
92b: projection
- 93:: second transmission member
93a: pin support hole
93b: projection insertion hole
93c: spring support portion
- 94:: lock rotating shaft
- 95:: second lock rotating shaft
- 96:: biasing spring (biasing member)
- 97:: connecting pin
- 98:: first lock cover
98a: body portion
98b: first fitted portion (fitting protrusion)
98c: third fitted portion (fitting protrusion)
98d: shaft support hole
98e: second shaft support hole
98f: cover assembly portion (assembly projection)
98g: second cover assembly portion
98h: cover flange
98i: first reinforcing portion
98j: second reinforcing portion
- 99:: second lock cover
99a: body portion
99b: second fitted portion (fitting protrusion)
99c: shaft support hole
99d: second shaft support hole
99e: assembled portion (assembly projection)
99f: second assembled portion (bent portion)
- 160:: cover member
- 162:: latching pawl (latched portion)
- 170:: lever attachment member
170a: side wall portion
170e: side flange portion
- 174:: latching portion
174a: latching hole
174b: latching support portion

### <Second embodiment>

- S2:: conveyance seat
- 201:: seat back
- 202:: seat cushion
- 240:: switching device
- 241:: striker
- 250:: operation lever
- 260:: cover member
- 270:: lever attachment member
- 280:: connecting link
- 289:: position holding member
- 290:: lock device
- 291:: lock member
291a: striker engagement portion
291b: contact portion
- 292:: transmission member
- 293:: second transmission member
- 294:: lock rotating shaft
- 295:: second lock rotating shaft
- 296:: biasing spring
- 297:: connecting pin
- 298:: first lock cover
298a: body portion
298k: attachment groove
298, 298m: attachment projection
298n: attachment hole, attachment protrusion
298o: opening
298p: latching groove
- 299:: second lock cover
- 300:: buffer member
- 301:: body portion
- 302, 303:: protruding portion
- 304:: projection portion
- 305:: relief groove
- 400:: buffer member
- 401:: body portion
- 402, 403:: protruding portion
- 404, 405:: second protruding portion
- 406:: attachment hole (cutout hole)
- 407, 408:: protruding portion
- 500:: buffer member
- 501:: body portion
- 502, 503:: protruding portion
- 504, 505:: second protruding portion
- 506:: attachment hole (cutout hole)
- 507, 508:: latching projection
- 600:: buffer member
- 601:: body portion
- 602, 603:: protruding portion
- 604, 605:: second protruding portion
- 606:: attachment hole (through-hole)
- 607, 608:: latching projection
- 700:: buffer member
- 701:: body portion
- 702, 703:: protruding portion
- 704, 705:: attachment recess

## Claims

1. A conveyance seat, comprising:
a seat body including a seat back and a seat cushion, the seat capable of switching the seat body between a normal state and a movement state where the seat body is moved from the normal state;
a lock device that locks a movement operation of the seat body in the normal state;
a lock cover covering the lock device;
a lever attachment member attached to the conveyance seat; and
an operation lever that is attached to the lever attachment member, and that operates to release a locked state of the lock device,
wherein the lever attachment member includes a first fitting portion fitted to a first fitted portion provided in the lock cover, and a second fitting portion fitted to a second fitted portion provided in the lock cover, and
the first fitting portion and the second fitting portion extend in respective directions orthogonal to a fitting direction of the lock cover, and extend in directions intersecting each other.

2. The conveyance seat according to claim 1,
wherein the movement state is a storage state where the seat back is stored and moved toward a vehicle body floor side,
the lock device includes a lock member that detachably engages with a striker provided on a vehicle body or the conveyance seat, and that moves between a lock position where the storage operation of the seat back is locked and an unlock position, and
the first fitting portion and the second fitting portion extend in directions orthogonal to each other.

3. The conveyance seat according to claim 1,
wherein the lock cover is assembled to the lever attachment member in a seat width direction, and
the first fitting portion and the second fitting portion are disposed at different positions in an up to down direction, and are disposed at different positions in a seat front to rear direction.

4. The conveyance seat according to claim 1, further comprising:
a connecting member that connects the lock device and the operation lever, and that acts to switch the lock device from the locked state to an unlocked state in response to the operation of the operation lever,
wherein the lever attachment member further includes a third fitting portion fitted to a third fitted portion provided in the lock cover, and
the third fitting portion is disposed opposite to a side of the first fitting portion and the second fitting portion with respect to the connecting member.

5. The conveyance seat according to claim 4,
wherein the first fitting portion and the third fitting portion extend long in the same direction.

6. The conveyance seat according to claim 4,
wherein the lock cover is assembled to the lever attachment member in a seat width direction, and
the second fitting portion is disposed between the first fitting portion and the third fitting portion in a seat front to rear direction.

7. The conveyance seat according to claim 4,
wherein the lock cover includes a first lock cover covering the lock device, and a second lock cover attached to a side surface of the first lock cover,
the first fitted portion and the third fitted portion are formed in the first lock cover, and
the second fitted portion is formed in the second lock cover.

8. The conveyance seat according to claim 4,
wherein the lever attachment member and the lock cover are assembled by fitting the first fitting portion, the second fitting portion, and the third fitting portion in the same direction.

9. The conveyance seat according to claim 4,
wherein the lock cover includes a cover flange formed to protrude from a side surface of an outer edge portion of the lock cover toward a lock device side, and disposed to surround the lock device, and
the first fitting portion, the second fitting portion, and the third fitting portion are disposed on a side surface of the lock cover outside the cover flange.

10. The conveyance seat according to claim 9,
wherein the lock cover includes a first reinforcing portion formed to protrude from the side surface of the outer edge portion of the lock cover toward the lock device side, and connecting the cover flange and the first fitting portion, and a second reinforcing portion formed to protrude from the side surface of the outer edge portion of the lock cover toward the lock device side, and connecting the cover flange and the third fitting portion.

11. The conveyance seat according to claim 1, further comprising:
a connecting member that connects the lock device and the operation lever, and that acts to switch the lock device from the locked state to an unlocked state in response to the operation of the operation lever; and
a position holding member attached to the connecting member, and holding a position of the connecting member,
wherein the connecting member extends between the lock device and the operation lever, and
the position holding member extends in an extending direction of the connecting member, and is attached to the connecting member to be aligned along the connecting member.

12. The conveyance seat according to claim 11,
wherein the movement state is a storage state where the seat back is stored and moved toward a vehicle body floor side,
the lock device includes a lock member that detachably engages with a striker provided on a vehicle body or the conveyance seat, and that moves between a lock position where the storage operation of the seat back is locked and an unlock position, and
the position holding member has flexibility, and bends in a direction orthogonal to an extending direction of the position holding member to hold the position of the connecting member.

13. The conveyance seat according to claim 1, further comprising:
a connecting member that connects the lock device and the operation lever, and that acts to switch the lock device from the locked state to an unlocked state in response to the operation of the operation lever; and
a biasing member assembled to the connecting member, and biasing the connecting member toward a lock device side or an operation lever side,
wherein the connecting member includes an assembly portion to which the biasing member is assembled, and
a body portion of the connecting member and the assembly portion are integrally formed.

14. The conveyance seat according to claim 13,
wherein the movement state is a storage state where the seat back is stored and moved toward a vehicle body floor side,
the lock device includes a lock member that detachably engages with a striker provided on a vehicle body or the conveyance seat, and that moves between a lock position where the storage operation of the seat back is locked and an unlock position, and
the assembly portion is an assembly projection protruding from a side surface of the body portion of the connecting member toward a biasing member, and is assembled to one end portion of the biasing member.

15. The conveyance seat according to claim 1, further comprising:
a cover member disposed between the lever attachment member and the operation lever, and covering the operation lever; and
a plate member having a plate shape, provided between the lever attachment member and the cover member, and disposed to surround the operation lever,
wherein the operation lever is provided to be exposed from a skin opening hole formed on an outer surface of a skin material serving as a covering material of the seat body,
an outer peripheral portion of the skin opening hole of the skin material is sandwiched between the cover member and the plate member, and
the lever attachment member includes a plate support portion protruding from a body portion of the lever attachment member toward a plate member side, and supporting the plate member by coming into contact with a side surface of the plate member.
